# EUROPEAN PATENT APPLICATION

(11) **EP 4 379 838 A1**
(43) Date of publication of application: **05.06.2024**
(21) Application number: 22939269.1
(22) Date of filing: 29.04.2022
(51) Int. Cl.: H01M 4/13, H01M 4/48, H01M 4/58, H01M 10/0567

(54) **SECONDARY BATTERY, AND BATTERY MODULE, BATTERY PACK AND ELECTRIC DEVICE COMPRISING SAME**

(71) Applicant: Contemporary Amperex Technology Co., Limited, Ningde City, Fujian 352100 (CN)
(72) Inventor: ZHANG, Limei, Ningde, Fujian 352100 (CN); CHEN, Peipei, Ningde, Fujian 352100 (CN); PENG, Chang, Ningde, Fujian 352100 (CN); LIU, Jiao, Ningde, Fujian 352100 (CN)
(74) Representative: Kraus & Lederer PartGmbB
(86) International application number: PCT/CN2022/090469
(87) International publication number: WO 2023/206421

(57) **Abstract**

The present application provides a secondary battery, a battery module, a battery pack and an electrical device containing the same. The secondary battery comprises a positive electrode plate, a negative electrode plate and a non-aqueous electrolytic solution, wherein the positive electrode plate comprises a positive electrode active material having a chemical formula of LiₘAₓMn_{1-y}B_{y}P_{1-z}C_{z}O₄₋ₙDₙ, and the non-aqueous electrolytic solution comprises a first additive comprising one or more of the compounds shown in Formula 1. The present application enables the secondary battery to simultaneously have high energy density with good rate performance, cycling performance, storage performance and safety performance.

O=C=N-R₁-N=C=O Formula 1.

## Description

### TECHNICAL FIELD

The present application belongs to the technical field of batteries, in particular to a secondary battery, a battery module, a battery pack and an electrical device containing the same.

### BACKGROUND

In recent years, secondary batteries have been widely used in energy storage power systems such as hydro, thermal, wind and solar power plants, as well as electric tools, electric bicycles, electric motorcycles, electric vehicles, military equipment, aerospace and many other fields. With the application and promotion of secondary batteries, their safety performances are receiving more and more attention. Lithium manganese phosphate has become one of the most popular positive electrode active materials due to its high capacity, good safety performance and abundant raw material sources; however, lithium manganese phosphate is prone to leach out manganese ion during charging, resulting in rapid capacity decay, thereby constraining its commercialization.

### SUMMARY

An object of the present application is to provide a secondary battery, a battery module, a battery pack and an electrical device containing the same, which enables the secondary battery to simultaneously have a high energy density as well as good rate performance, cycling performance, storage performance, and safety performance.

A first aspect of the present application provides a secondary battery comprising a positive electrode plate, a negative electrode plate and a non-aqueous electrolytic solution, wherein
the positive electrode plate comprises a positive electrode active material having a chemical formula of LiₘAₓMn_{1-y}B_{y}P_{1-z}C_{z}O₄₋ₙDₙ, A comprising one or more elements selected from Zn, Al, Na, K, Mg, Nb, Mo and W, B comprising one or more elements selected from Ti, V, Zr, Fe, Ni, Mg, Co, Ga, Sn, Sb, Nb and Ge, C comprising one or more elements selected from B (boron), S, Si and N, D comprising one or more elements selected from S, F, Cl and Br, m being within the range of 0.9 to 1.1, x being within the range of 0.001 to 0.1, y being within the range of 0.001 to 0.5, z being within the range of 0.001 to 0.1, n being within the range of 0.001 to 0.1, and the positive electrode active material is electrically neutral;
the non-aqueous electrolytic solution comprises a first additive comprising one or more of the compounds shown in Formula 1:

   O=C=N-R₁-N=C=O Formula 1,

   in which R₁ represents at least one of the group consisting of the following groups substituted or unsubstituted by Rₐ: C2∼C10 divalent alkyl, C2∼C10 divalent heteroalkyl, C6∼C18 divalent aryl, C7∼C18 divalent aryl alkyl, C7∼C18 divalent alkyl aryl, C8∼C18 divalent alkyl aryl alkyl, C13∼C18 divalent aryl alkyl aryl, C2∼C18 divalent heteroaryl, C3∼C18 divalent heteroarylalkyl, C3∼C18 divalent alkylheteroaryl, C4∼C18 divalent alkylheteroarylalkyl, C5∼C18 divalent heteroarylalkylheteroaryl, C3∼C18 divalent alcyl, C4∼C18 divalent alcyl alkyl, C4∼C18 divalent alkyl alcyl, C5∼C18 divalent alkyl alcyl alkyl, C7∼C18 divalent alcyl alkyl alcyl, C2∼C18 divalent heteroalcyl, C3∼C18 divalent heteroalcyl alkyl, C3∼C18 divalent alkyl heteroalcyl, C4∼C18 divalent alkyl heteroalcyl alkyl, and C5∼C18 divalent heteroalcyl alkyl heteroalcyl.

Optionally, Rₐ comprises one or more selected from halogen atoms, -CN, -NCO, -OH, -COOH, -SOOH, carboxylate group, sulfonate group, sulfate group, C1∼C10 alkyl, C2∼C10 alkenyl, C2∼C10 alkynyl, C2∼C10 oxoalkyl, phenyl, and benzyl.

In the present application, by simultaneously doping specific elements in specific amounts at the Li, Mn, P, and O sites of the compound LiMnPO₄, improved rate performance can be obtained, while the leaching out of Mn and the doping elements at Mn-site is reduced, improved cycling performance and/or high-temperature stability can be obtained, and the specific capacity and the compaction density of the positive electrode active material can also be improved. When the non-aqueous electrolytic solution comprises the first additive shown in Formula 1 above, the first additive can react with a trace amount of water in the non-aqueous electrolytic solution to form -NHCOOH, reduce the generation of HF, reduce the acidity of the non-aqueous electrolytic solution, and thereby reduce the leaching out of manganese ions, and the interfacial side effects. At the same time, the first additive shown in Formula 1 is also capable of generating a uniform and dense interfacial film on the surface of the negative electrode active material, reducing the reduction reaction of the leached manganese ions at the negative electrode. Therefore, the secondary battery of the present application can simultaneously have high energy density as well as good rate performance, cycling performance, storage performance and safety performance.

In embodiments of the present application, R₁ represents at least one of the group consisting of the following groups substituted or unsubstituted by Rₐ: C2∼C10 alkylidene, C2∼C10 oxoalkylidene, C2∼C10 azidoalkylidene, phenylidene, o-phenylenedimethylene, m-phenylenedimethylene, p-phenylenedimethylene, monomethylphenylene, dimethylphenylene, trimethylphenylene, tetramethylphenylene, monoethylphenylene, diethylphenylene, triethylphenylene, tetraethylphenylene, biphenylene, terphenylene, quaterphenylene, diphenylmethyl, cyclobutylidene, o-cyclobutyldimethylene, m-cyclobutyldimethylene, p-cyclobutyldimethylene, cyclopentylidene, o-cyclopentyldimethylene, m- cyclopentyldimethylene, p- cyclopentyldimethylene, cyclohexylidene, monomethyl cyclohexylidene, dimethyl cyclohexylidene, trimethyl cyclohexylidene, tetramethyl cyclohexylidene, o-cyclohexyldimethylene, m-cyclohexyldimethylene, p-cyclohexyldimethylene, dicyclohexylmethane, methylcyclohexyl, naphthylene, anthrylene and perhydroanthrylene. Optionally, Rₐ comprises one or more selected from a fluorine atom, -CN, -NCO, -OH, -COOH,-SOOH, carboxylate group, sulfonate group, sulfate group, C1∼C10 alkyl, C2∼C10 alkenyl, C2∼C10 alkynyl, C2∼C10 oxoalkyl, phenyl and benzyl

When R₁ represents the above substituent group, it is capable of further reducing the generation of HF and lowering the acidity of the non-aqueous electrolytic solution, and at the same time helping to generate a uniform, dense interfacial film with low impedance on the surface of the negative electrode active material, whereby the improvement effect on the cycling performance and the storage performance of the secondary battery can be further enhanced.

In embodiments of the present application, the first additive comprises at least one of the following compounds:

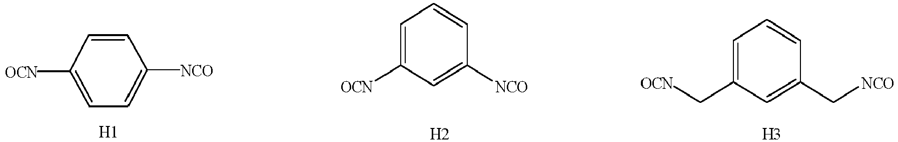

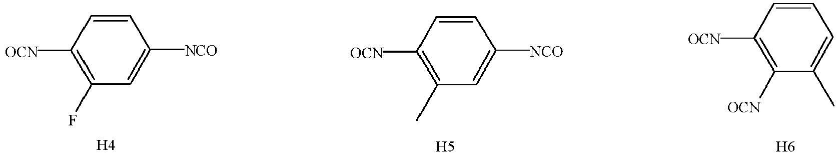

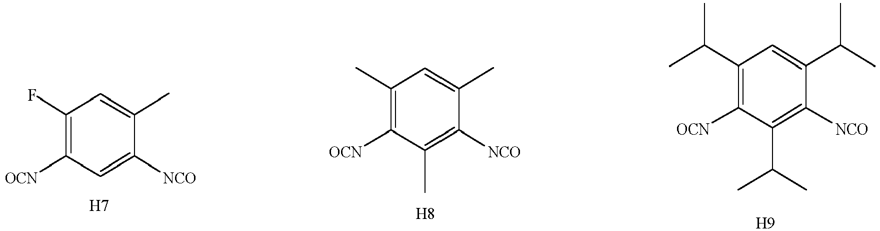

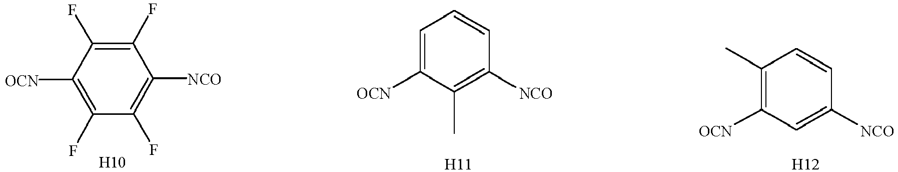

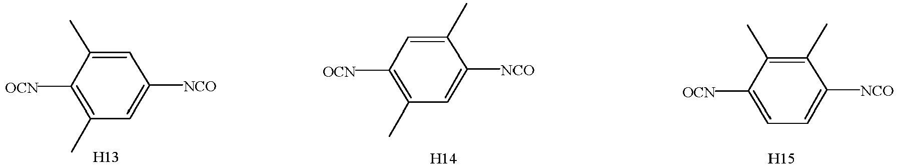

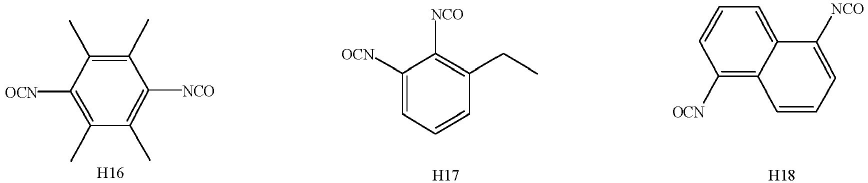

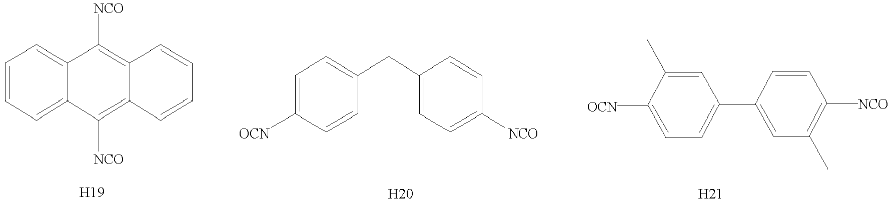

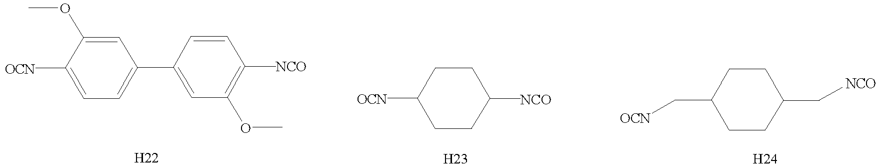

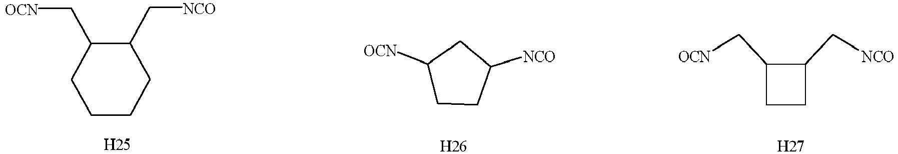

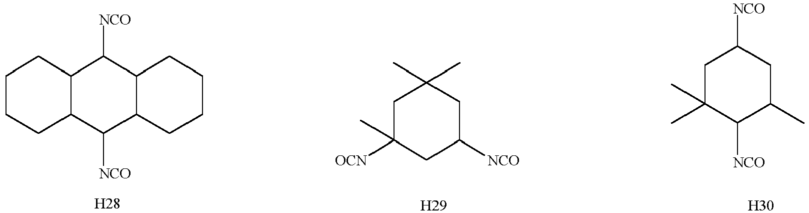

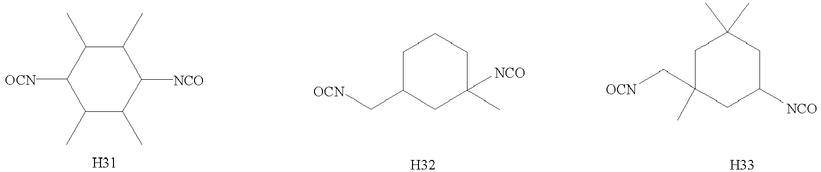

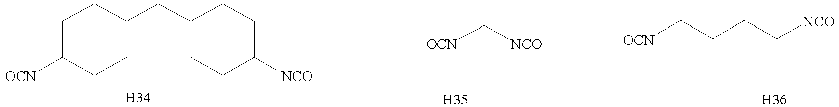

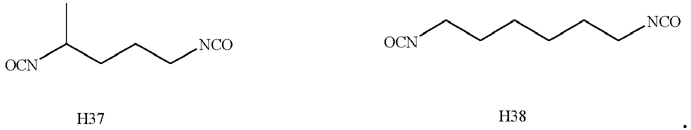

The inventors found in the course of their research that using at least one of the above compounds H1 to H38 as a first additive can further reduce the generation of HF and lower the acidity of the non-aqueous electrolytic solution, and at the same time help to generate a uniform and dense interfacial film with low impedance on the surface of the negative electrode active material, whereby the effect of improving the cycling performance and storage performance of the secondary battery can be further enhanced.

In embodiments of the present application, the first additive is present in an amount of W1% by weight, with W1 being from 0.01 to 20, optionally from 0.1 to 10, more optionally from 0.3 to 5, based on the total weight of the non-aqueous electrolytic solution. As a result, both the generation of HF and the acidity of the non-aqueous electrolytic solution can be reduced without deteriorating the negative electrode interfacial impedance, which in turn can significantly improve the cycling performance and storage performance of the secondary battery without affecting the capacity exertion and rate performance of the secondary battery.

In embodiments of the present application, the non-aqueous electrolytic solution further comprises a second additive, and the second additive comprises one or more of ethylene sulfate, lithium difluorophosphate, lithium bisoxalatodifluorophosphate, R₂[FSO₃⁻]ₐ, and R₂[C_{b}F_{2b+1}SO₃⁻]ₐ, a being an integer from 1 to 5 and b being an integer from 1 to 6, and R₂ representing a metal cation or an organic group cation. Optionally, the metal cation comprises one or more selected from Li⁺, Na⁺, K⁺, Rb⁺, Cs⁺, Mg²⁺, Ca²⁺, Ba²⁺, Al³⁺, Fe²⁺, Fe³⁺, Cu²⁺, Ni²⁺ and Ni³⁺. Optionally, the organic group cation comprises one or more selected from NH₄⁺, N(CH₃)₄⁺, and N(CH₂CH₃)₄⁺.

When the non-aqueous electrolytic solution comprises both the first additive and the second additive, it helps to significantly improve the cycling performance and the storage performance of the secondary battery, and at the same time enhances the capacity exertion and the rate performance of the secondary battery.

In embodiments of the present application, the second additive is present in an amount of W2% by weight, with W2 being from 0.01 to 20, optionally from 0.1 to 10, more optionally from 0.3 to 5, based on the total weight of the non-aqueous electrolytic solution. This can thereby effectively improve the capacity exertion and rate performance of the secondary battery.

In embodiments of the present application, the non-aqueous electrolytic solution further comprises a third additive, and the third additive comprises one or more of a cyclic carbonate compound containing unsaturated bonds, a halogenated cyclic carbonate compound, a sulfate compound, a sulfite compound, a sultone compound, a disulfonate compound, a nitrile compound, a phosphonitrile compound, an aromatic hydrocarbon and halogenated aromatic hydrocarbon compound, an acid anhydride compound, a phosphite compound, a phosphate compound, and a borate compound. When a non-aqueous electrolytic solution contains both a first additive and a third additive, or a first additive, a second additive and a third additive, the third additive helps to form a more dense and stable interfacial film on the surface of the positive electrode and/or the negative electrode active material, thereby helping to further enhance at least one of the cycling performance, the storage performance, and the rate performance of the secondary battery.

In embodiments of the present application, the third additive is present in an amount of W3% by weight, with W3 being from 0.01 to 10, optionally from 0.1 to 10, more optionally from 0.3 to 5, based on the total weight of the non-aqueous electrolytic solution.

In embodiments of the present application, the A, C and D are each independently any one element within the respective ranges described above, and the B is at least two elements within its range.

Optionally, the A is an element selected from any one of Mg and Nb.

Optionally, the B is at least two elements selected from among Fe, Ti, V, Co and Mg, more optionally Fe with more than one element selected from among Ti, V, Co and Mg.

Optionally, the C is S.

Optionally, the D is F.

As a result, at least one of rate performance, capacity exertion, and high-temperature stability of the secondary battery can be further improved.

In embodiments of the present application, x is selected from the range of 0.001 to 0.005. As a result, the kinetic performance of the positive electrode active material can be further improved.

In embodiments of the present application, y is selected from the range of 0.01 to 0.5, optionally from the range of 0.25 to 0.5. As a result, the specific capacity and rate performance of the positive electrode active material can be further improved.

In embodiments of the present application, z is selected from the range of 0.001 to 0.005. Thereby, the rate performance of the secondary battery can be further improved.

In embodiments of the present application, n is selected from the range of 0.001 to 0.005. Thereby, the high-temperature stability of the secondary battery can be further improved.

In embodiments of the present application, (1-y):y is in the range of 1 to 4, optionally in the range of 1.5 to 3, and m:x is in the range of 9 to 1100, optionally in the range of 190-998. As a result, the energy density and cycling performance of the secondary battery may be further improved.

In embodiments of the present application, the positive electrode active material has a lattice change rate of 8% or less, optionally 4% or less. As a result, the rate performance of the secondary battery can be improved.

In embodiments of the present application, the positive electrode active material has a Li/Mn anti-site defect concentration of 2% or less, optionally 0.5% or less. As a result, the specific capacity and rate performance of the positive electrode active material can be improved.

In embodiments of the present application, the positive electrode active material has a surface oxygen valence of -1.82 or less, optionally -1.89 to -1.98. Thereby, the cycling performance and high-temperature stability of the secondary battery can be improved.

In embodiments of the present application, the positive electrode active material has a compaction density at 3T of 2.0 g/cm³ or more, optionally 2.2 g/cm³ or more. As a result, the volumetric energy density of the secondary battery can be improved.

In embodiments of the present application, the surface of the positive electrode active material is coated with carbon. Thereby, the electrical conductivity of the positive electrode active material can be improved.

A second aspect of the present application provides a battery module, comprising the secondary battery according to the first aspect of the present application.

A third aspect of the present application provides a battery pack, comprising the battery module according to the second aspect of the present application.

A fourth aspect of the present application provides an electrical device comprising at least one of the secondary battery of the first aspect of the present application, the battery module of the second aspect of the present application or the battery pack of the third aspect of the present application.

The battery module, battery pack and electrical device include the secondary battery of the present application, and thus have at least the same advantages as the secondary battery.

### DESCRIPTION OF THE DRAWINGS

In order to explain the technical solutions of the embodiments of the present application more clearly, the following will briefly introduce the drawings that need to be used in the embodiments of the present application. Apparently, the drawings described below are only some embodiments of the present application. A person of ordinary skill in the art can obtain other drawings based on the accompanying drawings without creative work.
Fig. 1 is a schematic diagram of a secondary battery according to an embodiment of the present application.
Fig. 2 is an exploded view of the secondary battery according to an embodiment of the present application as shown in Fig. 1.
Fig. 3 is a schematic diagram of a battery module according to an embodiment of the present application.
Fig. 4 is a schematic diagram of a battery pack according to an embodiment of the present application.
Fig. 5 is an exploded view of the battery pack according to an embodiment of the present application as shown in Fig. 4.
Fig. 6 is a schematic diagram of an electrical device according to an embodiment of the present application using the secondary battery of the present application as power.
Fig. 7 illustrates an X-ray diffraction (XRD) of the undoped LiMnPO₄ and a core of the positive electrode active material prepared in Example 2.
Fig. 8 illustrates an X-ray energy dispersive spectroscopy (EDS) of a core of the positive electrode active material prepared in Example 2.

In the drawings, the accompanying drawings are not necessarily drawn to actual scale. The reference numerals are defined as follows:
1 battery pack
2 upper case body
3 lower case body
4 battery module
5 secondary battery
51 housing
52 electrode assembly
53 cover plate.

### DETAILED DESCRIPTION

Hereinafter, embodiments of the secondary battery and the battery module, the battery pack and the electrical device containing the same will be described in detail with reference to the accompanying drawings as appropriate. However, unnecessary detailed descriptions may be omitted in some cases, for example the detailed description of a well-known item or the repetitive description of an actually identical structure, so as to prevent the following description from becoming unnecessarily redundant and to facilitate understanding by those skilled in the art. In addition, the drawings and the following description are provided for those skilled in the art to fully understand the present application, and are not intended to limit the subject matter described in the claims.

The "range(s)" disclosed in this application is/are defined in the form of lower and upper limits, and a given range is defined by selection of a lower limit and an upper limit that define boundary of the particular range. Ranges defined in this manner may or may not be inclusive of the endpoints, and may be arbitrarily combined. That is, any lower limit may be combined with any upper limit to form a range. For example, if the ranges of 60-120 and 80-110 are listed for a particular parameter, it is to be understood that the ranges of 60-110 and 80-120 are also contemplated. Additionally, if the minimum range values 1 and 2 are listed, and the maximum range values 3, 4, and 5 are listed, the following ranges are all expected: 1-3, 1-4, 1-5, 2- 3, 2-4 and 2-5. In the present application, unless stated otherwise, the numerical range "a-b" represents an abbreviated representation of any combination of real numbers between a and b, where both a and b are real numbers. For example, the numerical range "0-5" means that all real numbers between "0-5" have been listed herein, and the range "0-5" is just an abbreviated representation of the combination of these numerical values. In addition, when a parameter is expressed as an integer greater than or equal to 2, it is equivalent to disclose that the parameter is, for example, an integer of 2, 3, 4, 5, 6, 7, 8, 9, 10, 11, 12, and the like.

Unless stated otherwise, all the embodiments and the optional embodiments of the present application can be combined with each other to form a new technical solution, and such technical solution should be considered to be included in the disclosure of the present application.

Unless stated otherwise, all technical features and optional technical features of the present application can be combined with each other to form a new technical solution, and such technical solution should be considered to be included in the disclosure of the present application.

Unless stated otherwise, all steps of the present application can be carried out sequentially, and also can be carried out randomly, preferably they are carried out sequentially. For example, the method includes steps (a) and (b), indicating that the method may include steps (a) and (b) performed in sequence, or that the method may include steps (b) and (a) performed in sequence. For example, reference to the method further comprising step (c) indicates that step (c) may be added to the method in any order. As an example, the method may comprises steps (a), (b) and (c), steps (a), (c) and (b), or steps (c), (a) and (b), and the like.

Unless stated otherwise, the transition phases "comprise", "comprising", "contain" and "containing" mentioned in the present application mean that it is drafted in an open mode, or it may also mean a close mode. For example, the transition phases "comprise", "comprising", "contain" and "containing" may mean that other components not listed may also be included or contained, or only the listed components may be included or contained.

In the present application herein, unless otherwise stated, the term "or" is inclusive. For example, the phrase "A or B" means "A, B, or both A and B". More specifically, any of the following conditions meets "A or B": A is true (or present) and B is false (or absent); A is false (or absent) and B is true (or present); or both A and B are true (or present).

As used herein, the terms "a plurality of ", and "more" mean two or more.

As used herein, heteroatoms comprise N, O, S, Si and the like.

As used herein, the term "alkyl" refers to a saturated hydrocarbon group, including both straight chain and branched chain structures. Examples of alkyl include, without being limited to, methyl, ethyl, propyl (e.g., n-propyl, isopropyl), butyl (e.g., n-butyl, iso-butyl, sec-butyl, tert-butyl), and pentyl (e.g., n-pentyl, iso-pentyl, neopentyl).

As used herein, the term "heteroalkyl" refers to a group in which at least one carbon atom in the alkyl group is substituted with a heteroatom. For example, an oxoalkyl group is a group in which at least one carbon atom in the alkyl group is substituted with an oxygen atom. The number of heteroatoms in a heteroalkyl group may be one or more, and the plurality of heteroatoms may be the same or different.

As used herein, the term "alkenyl" refers to an unsaturated hydrocarbon group containing carbon-carbon double bonds, including both straight chain and branched chain structures, and the number of carbon-carbon double bonds may be one or more. Examples of alkenyl groups include, but are not limited to, vinyl, propenyl, allyl, and butadienyl.

As used herein, the term "alkynl" refers to an unsaturated hydrocarbon group containing a carbon-carbon triple bond, including both straight chain and branched chain structures, and the number of carbon-carbon triple bonds may be one or more. Examples of the alkynyl group include, but are not limited to, ethynyl, propynyl, butynyl, and butadiynyl.

As used herein, the term "aryl" refers to a closed aromatic ring or ring system. When not explicitly stated, an "aryl" structure may be a monocyclic, polycyclic, or fused ring, among others. Examples of aryl groups include, but are not limited to, phenyl, naphthyl, anthracenyl, phenanthryl, biphenyl, triphenyl, tetraphenyl, triphenylene, pyrenyl, chrysenyl, perylenyl, indenyl, benzophenanthrenyl, fluorenyl, 9,9-dimethylfluorenyl, and spiro-bifluorenyl

As used herein, the term "heteroaryl" means that one or more atoms in the ring of the aryl group are elements other than carbon (e.g., N, O, S, Si, etc.). Examples of the heteroaryl group include, but are not limited to, pyrrolyl, furanyl, thiophenyl, indolyl, benzofuranyl, benzothiophenyl, dibenzofuranyl, dibenzothiophenyl, carbazolyl, indenocarbazolyl, indolocarbazolyl, pyridinyl, pyrimidinyl, pyrazinyl, pyridazinyl, triazinyl, oxazolyl, isoxazolyl, thiazolyl, and isothiazolyl. The number of heteroatoms in the heteroaryl group may be one or more, and the plurality of heteroatoms may be the same or different.

The term "alicyclic group" refers to carbocyclic systems of aliphatic nature, including cyclized alkyl, alkenyl and alkynyl groups, which may be monocyclic or polycyclic in structure (e.g., fused, bridged, spiro). Examples of alicyclic groups include, but are not limited to, cyclopropyl, cyclobutyl, cyclopentyl, cyclohexyl, cycloheptyl, cyclopentenyl, cyclohexenyl, and cyclohexynyl.

The term "heterocyclyl" means that one or more atoms in the alicyclic ring are elements other than carbon (e.g., N, O, S, Si, etc.). The number of heteroatoms in a heterocyclic group may be one or more, and the plurality of heteroatoms may be the same or different. Examples of heterocyclyl ring groups include, but are not limited to, oxiranyl, aziridinyl, and propiolactone group.

As used herein, when the substituent is "divalent" or a group with the suffix "ene", it refers to a group formed by removing two H atoms from a molecule.

As used herein, when the substituent indicates a group consisting of certain groups, it includes a group formed by single bonding of these groups. For example, when the substituent denotes "at least one of the group consisting of a C2∼C10 divalent alkyl group, a C6∼C18 divalent aryl group", the substituent alone discloses alkylaryl or arylalkyl or alkylarylalkyl or arylalkylaryl formed by bonding a C2∼C10 divalent alkyl group, a C6∼C18 divalent aryl group, a C2∼C10 divalent alkyl group with a C6∼C18 divalent aryl group by a single bond.

In the context of the present application, substituents of compounds are disclosed as groups or ranges. It is explicitly expected that such a description includes each individual subcombination of members of these groups and ranges. For example, the term "C1-C6 alkyl group" is explicitly expected to disclose C1, C2, C3, C4, C5, C6, C1-C6, C1-C5, C1-C4, C1-C3, C1-C2, C2-C6, C2-C5, C2-C4, C1-C3, C1-C2, C3-C6, C3-C5, C3-C4, C4-C6, C4-C5, C5-C6, alkyl groups.

The inventors of the present application have found in practical operations that manganese ion's leaching out is serious during the deep charging and discharging of the lithium manganese phosphate LiMnPO₄ positive electrode active materials. Although there are attempts in the prior art to coat the lithium manganese phosphate with lithium iron phosphate, thereby reducing the interfacial side reaction, such coating cannot prevent the dissolved manganese ions from migrating into the non-aqueous electrolytic solution. The leached-out manganese ions are reduced to manganese metal after migrating to the negative electrode. The manganese metal thus produced is equivalent to a "catalyst", which can catalyze the decomposition of the SEI film (solid electrolyte interphase) on the surface of the negative electrode, and some of the by-products are gases, which can easily lead to the expansion of the battery, affecting the safety of the secondary battery. Others are deposited on the surface of the negative electrode, which will hinder the passage of lithium ions in and out of the negative electrode, resulting in an increase in the impedance of the secondary battery, thereby affecting the kinetic performance of the battery. In addition, in order to replenish the lost SEI film, the non-aqueous electrolytic solution and the active lithium ions inside the battery are constantly consumed, which can bring irreversible effects on the capacity retention rate of the secondary battery.

The inventors, after thorough consideration on a positive electrode and a non-aqueous electrolytic solution, have designed a secondary battery capable of simultaneously combining a high energy density with good rate performance, cycle performance, storage performance and safety performance.

Specifically, a first aspect of the present application provides a secondary battery.

### SECONDARY BATTERY

A secondary battery, also known as a rechargeable battery or accumulator, is a battery that can continue to be used by activating its active material by means of charging after the battery has been discharged. Typically, a secondary battery includes an electrode assembly and a non-aqueous electrolytic solution, and the electrode assembly includes a positive electrode plate, a negative electrode plate, and a separator. The separator is disposed between the positive electrode plate and the negative electrode plate, which mainly functions to prevent short circuit of the positive and negative electrodes while allowing lithium ions to pass through. The non-aqueous electrolytic solution functions to conduct lithium ions between the positive electrode plate and the negative electrode plate.

### [Positive electrode plate]

The secondary battery of the present application adopts a positive electrode plate comprising a positive electrode active material having a chemical formula of LiₘAₓMn_{1-y}B_{y}P_{1-z}C_{z}O₄₋ₙDₙ, A comprising one or more elements selected from Zn, Al, Na, K, Mg, Nb, Mo and W, B comprising one or more elements selected from Ti, V, Zr, Fe, Ni, Mg, Co, Ga, Sn, Sb, Nb and Ge, C comprising one or more elements selected from B (boron), S, Si and N, D comprising one or more elements selected from S, F, Cl and Br, m being selected from the range of 0.9 to 1.1, x being within the range of 0.001 to 0.1, y being within the range of 0.001 to 0.5, z being within the range of 0.001 to 0.1, n being within the range of 0.001 to 0.1, and the positive electrode active material is electrically neutral.

Unless otherwise stated, in the above chemical formula, when A represents more than two elements, the above range for the x value is not only for the stoichiometric number of each element as A, but also for the sum of the stoichiometric numbers of each element as A. For example, when A represents more than two elements A1, A2 ...... and An, each of the respective stoichiometric numbers x1, x2 ......and xn of respective A1, A2 ......and An must fall within the numerical range defined by the present application for x, and the sum of x1, x2...... and xn must also fall within such numerical range of the present application. Similarly, in the case where B, C or D is more than two elements, the limitations on numerical ranges for the stoichiometric numbers of B, C or D in the present application also have the above meaning.

The positive electrode active material of the present application is obtained by elemental doping in the compound LiMnPO₄, wherein A, B, C, and D are the elements doping the Li, Mn, P, and O sites of the compound LiMnPO₄, respectively. Without wishing to be limited by theory, it is now believed that the performance enhancement of lithium manganese phosphate is related to the reduction of the lattice change rate of lithium manganese phosphate during deintercalation and intercalation of lithium and the reduction of the surface activity. Reducing the lattice change rate can reduce the difference in lattice constants between the two phases at the grain boundary, reduce the interfacial stress, and enhance the Li+ transport ability at the interface, thus improving the rate performance of the positive electrode active material. In contrast, high surface activity is likely to lead to serious interfacial side reactions, exacerbating gas production and non-aqueous electrolytic solution's consumption, and damaging the interface, thereby affecting the performance of the secondary battery such as cycling performance. In the present application, the lattice change rate is reduced by doping Li- and Mn-site, and the Mn-site doping also effectively reduces the surface activity, thereby inhibiting manganese ion's leaching out and the interfacial side reaction between the positive electrode active material and the non-aqueous electrolytic solution. P-site doping makes the rate of change of the Mn-O bond length faster, and reduces the material's small polarization migration barrier, thereby contributing to the enhancement of the electronic conductivity. O-site doping has a good effect on reducing interfacial side reactions. The P-site and O-site doping also affects the leaching out of manganese ion having anti-site defects and the kinetic performance.

Therefore, doping reduces the anti-site defect concentration in the positive electrode active material, improves the kinetic performance and specific capacity of the positive electrode active material, and also changes the morphology of the particles, thereby enhancing the compaction density. The inventors of the present application have unexpectedly found that by doping specific elements at the Li, Mn, P and O sites of the compound LiMnPO₄ at the same time in a specific amount, improved rate performance can be obtained, and at the same time the leaching of the dopant elements at the Mn and Mn sites is reduced, improved cycling performance and/or high-temperature stability is obtained, and the specific capacity and the compaction density of the positive electrode active material can also be improved.

Optionally, A is one or more elements selected from Zn, Al, Na, K, Mg, Nb, Mo, and W, B is one or more elements selected from Ti, V, Zr, Fe, Ni, Mg, Co, Ga, Sn, Sb, Nb, and Ge, C is one or more elements selected from B (boron), S, Si, and N, and D is one or more elements selected from S, F, Cl and Br.

It should be noted that in the present application, by comparing the XRD spectra before and after the doping of LiMnPO₄, it is found that the positions of the main characteristic peaks of the positive electrode active material of the present application and the positive electrode active material of the present application before doping LiMnPO₄ are basically the same, indicating that the doped lithium manganese phosphate positive electrode active material does not have an impurity phase, and the improvement of the performance of the secondary battery is mainly caused by elemental doping rather than the impurity phase.

In some embodiments, each of A, C, and D is independently any one of the elements within the respective ranges described above, and B is at least two of the elements within its range. This enables easier and more accurate control of the composition of the positive electrode active material.

Optionally, A is an element selected from any one of Mg and Nb.

Optionally, B is at least two elements selected from among Fe, Ti, V, Co and Mg, optionally Fe with more than one element selected from among Ti, V, Co and Mg.

Optionally, C is S.

Optionally, D is F.

By selecting the Li-site doping element within the above range, the lattice change rate during the delithiation process can be further reduced, thereby further improving the rate performance of the secondary battery. By selecting the Mn-site doping element within the above range, the electronic conductivity can be further improved and the lattice change rate can be further reduced, thereby improving the rate performance and capacity exertion of the secondary battery. By selecting the P-site doping element within the above range, the rate performance of the secondary battery can be further improved. By selecting the O-site doping element within the above range, the side reaction at the interface can be further mitigated, and the high-temperature stability of the secondary battery can be improved.
m is selected from the range of 0.9 to 1.1, for example, 0.97, 0.977, 0.984, 0.988, 0.99, 0.991, 0.992, 0.993, 0.994, 0.995, 0.996, 0.997, 0.998, or 1.01.
x is selected from the range of 0.001 to 0.1, for example 0.001, or 0.005.
y is selected from the range of 0.001 to 0.5, for example, 0.001, 0.005, 0.02, 0.05, 0.1, 0.15, 0.2, 0.25, 0.3, 0.34, 0.345, 0.349, 0.35, or 0.4.
z is selected from the range of 0.001 to 0.1, for example 0.001, 0.005, 0.08, or 0.1.
n is selected from the range of 0.001 to 0.1, for example 0.001, 0.005, 0.08, or 0.1.

In some embodiments, x is selected from the range of 0.001 to 0.005.

In some embodiments, y is selected from the range of 0.01 to 0.5, optionally from the range of 0.25 to 0.5.

In some embodiments, z is selected from the range of 0.001 to 0.005.

In some embodiments, n is selected from the range of 0.001 to 0.005.

By selecting the x value within the above range, the kinetic performance of the positive electrode active material can be further improved. By selecting the y value in the above range, the specific capacity and rate performance of the positive electrode active material can be further improved. By selecting the z value in the above range, the rate performance of the secondary battery can be further improved. By selecting the n value within the above range, the high-temperature stability of the secondary battery can be further improved.

In some embodiments, the positive electrode active material satisfies (1-y):y in the range of 1 to 4, optionally in the range of 1.5 to 3, and m:x in the range of 9 to 1100, optionally in the range of 190-998. Herein y denotes the sum of the stoichiometric numbers of the Mn-site doping element. The energy density and cycling performance of the secondary battery may be further improved when the above conditions are met.

In some embodiments, the positive electrode active material is coated with carbon on the surface. As a result, the electrical conductivity of the positive electrode active material can be improved.

In some embodiments, the positive electrode active material has a lattice change rate of 8% or less, optionally 4% or less. By lowering the lattice change rate, it is possible to make Li ion transport easier, i.e., Li ions migrate more in the material, which is conducive to improving the rate performance of the secondary battery. The lattice change rate can be measured by methods known in the art, such as X-ray diffraction (XRD).

In some embodiments, the positive electrode active material has a Li/Mn anti-site defect concentration of 2% or less, optionally 0.5% or less. The term Li/Mn anti-site defect refers to interchange of Li⁺ with Mn²⁺ in terms of its site in the LiMnPO₄ lattice. Accordingly, the Li/Mn anti-site defect concentration refers to a percentage of Li⁺ interchanged with Mn²⁺ in the positive electrode active material relative to the total amount of Li⁺. The anti-site defective Mn²⁺ hinders Li+ transport, and by reducing the Li/Mn anti-site defect concentration, it facilitates the improvement of the specific capacity and rate performance of the positive electrode active material. The Li/Mn anti-site defect concentration can be measured by methods known in the art, such as XRD.

In some embodiments, the positive electrode active material has a surface oxygen valence of -1.82 or less, optionally -1.89 to -1.98. By lowering the surface oxygen valence, it is possible to mitigate the interfacial side reaction between the positive electrode active material and the non-aqueous electrolytic solution, thereby improving the cycling performance and high-temperature stability of the secondary battery. The surface oxygen valence can be measured by methods known in the art, such as by electron energy loss spectroscopy (EELS).

In some embodiments, the positive electrode active material has a compaction density at 3T (tonne) of 2.0 g/cm³ or more, optionally 2.2 g/cm³ or more. The higher the compaction density is, the greater the weight of the positive electrode active material per unit volume is. Thus, increasing the compaction density is conducive to improving volumetric energy density of secondary batteries. The compaction density can be measured according to GB/T 24533-2009.

The present application further provide a method for preparing the positive electrode active material, comprising the following steps (1) to (5):
step (1), dissolving a manganese source, a source of element B and an acid in a solvent and stirring to produce a suspension of a manganese salt doped with element B, filtering the suspension and drying the resulting filter cake to obtain the manganese salt doped with element B; step (2), adding a lithium source, a phosphorus source, a source of element A, a source of element C and a source of element D, a solvent and the manganese salt doped with element B obtained from step (1) to a reaction vessel for grinding and mixing to obtain a slurry; step (3), transferring the slurry obtained from step (2) to a spray drying equipment for spray drying and granulating to obtain granules; and step (4), sintering the granules obtained from step (3) to obtain the positive electrode active material.

In some embodiments, the source of element A is selected from at least one of elemental substance, oxides, phosphates, oxalates, carbonates and sulfates of element A; the source of element B is selected from at least one of elemental substance, oxides, phosphates, oxalates, carbonates and sulfates of element B; the source of element C is selected from at least one of sulfates, borates, nitrates and silicates of element C; and the source of element D is selected from at least one of elemental substance and ammonium salts of element D. By selecting the source of each doping element, the uniform distribution of the doping element can be improved, so as to improve the performance of the positive electrode active material.

In some embodiments, the acid is one or more selected from hydrochloric acid, sulfuric acid, nitric acid, phosphoric acid, organic acids such as oxalic acid, and the like, for example oxalic acid. In some embodiments, the acid is a diluted acid with a concentration of 60 wt% or less.

In some embodiments, the manganese source may be a manganese-containing substance known in the art that can be used to prepare lithium manganese phosphate. For example, the manganese source may be one or more selected from elemental manganese, manganese dioxide, manganese phosphate, manganese oxalate, and manganese carbonate.

In some embodiments, the lithium source may be a lithium-containing substance known in the art that can be used to prepare lithium manganese phosphate. For example, the lithium source may be one or more selected from lithium carbonate, lithium hydroxide, lithium phosphate, and lithium dihydrogen phosphate.

In some embodiments, the phosphorus source may be a phosphorus-containing substance known in the art that can be used to prepare lithium manganese phosphate. For example, the phosphorus source may be one or more selected from diammonium hydrogen phosphate, ammonium dihydrogen phosphate, ammonium phosphate and phosphoric acid.

The adding amount of the respective sources of elements A, B, C, and D depends on the target doping amount, and the ratio of the amounts of lithium, manganese, and phosphorus sources corresponds to the stoichiometric ratio.

In some embodiments, the solvents in step (1) and step (2) may each independently be solvents routinely used by those skilled in the art in the preparation of manganese salts and lithium manganese phosphate, and for example, they may each independently be selected from at least one of ethanol, water (such as deionized water), and the like.

In some embodiments, stirring in step (1) proceeds at a temperature in the range of 60-120°C. In some embodiments, stirring in step (1) proceeds at a rate of 200-800 rpm, or 300-800 rpm, or 400-800 rpm. In some embodiments, stirring in step (1) proceeds for 6-12 hours. In some embodiments, grinding and mixing in step (2) proceed for 8-15 hours.

By controlling the reaction temperature, stirring speed and mixing time during doping, uniform distribution of doping elements and higher crystallinity of materials after sintering can be achieved, which can enhance specific capacity and rate performance of the positive electrode active material.

In some embodiments, the filter cake in step (1) may be washed prior to drying the filter cake.

In some embodiments, drying in step (1) may be performed in a manner and under a condition known to those skilled in the art. For example, the drying may proceed at a temperature in the range of 120-300°C. Optionally, the filter cake may be ground into particles after drying, for example, into particles having a median particle size Dv₅₀ in the range of 50-200 nm. As used herein, the term "median particle size Dv50" is a particle size at which a cumulative volume distribution percentage of a material reaches to 50%. In the present application, the median particle size Dv50 of a material may be determined using a laser diffraction particle size analysis. For example, with reference to standard GB/T 19077-2016, it is determined using a laser particle size analyzer (e.g., Malvern Master Size 3000).

In some embodiments, a carbon source is further added to the reaction vessel in step (2) together with grinding and mixing. Thereby, the method results in a positive electrode active material with carbon coated on the surface. Optionally, the carbon source comprises one or more of starch, sucrose, glucose, polyvinyl alcohol, polyethylene glycol, and citric acid. The molar ratio of the amount of the carbon source relative to the amount of the lithium source is typically in the range of 0.1%-5%. The grinding may be done by suitable grinding methods known in the art, for example by sand milling.

In some embodiments, the temperature and time of spray drying in step (3) may be the temperature and time routinely used in the art for performing spray drying, e.g., 1-6 hours at 100-300°C.

In some embodiments, sintering in step (4) proceeds at a temperature in the range of 600-900°C for 6-14 hours. By controlling the sintering temperature and time, it is possible to control crystallinity of the positive electrode active material and reduce the amount of leaching out of Mn and Mn-site doping elements after cycling, thereby improving high-temperature stability and cycling performance of the battery.

In some embodiments, sintering in step (4) proceeds under a protective atmosphere, wherein the protective atmosphere may be nitrogen, inert gas, hydrogen or a mixture thereof.

The positive electrode plate of the present application comprises a positive electrode current collector and a positive electrode film provided on at least one surface of the positive electrode current collector. In particular, the positive electrode current collector has two surfaces opposite to each other in the direction of its own thickness, and the positive electrode film is provided on either or both of two opposite surfaces of the positive electrode current collector. The positive electrode film comprises the positive electrode active material of the present application described above.

In some embodiments, optionally, the positive electrode active material is present in the positive electrode film in a content of 10 wt% or more, based on the total weight of the positive electrode film. More optionally, the positive electrode active material is present in the positive electrode film in a content of from 95 wt% to 99.5wt%, based on the total weight of the positive electrode film.

When the content of the positive electrode active material is within the above range, it is conducive to fully utilizing the advantages of the positive electrode active material of the present application.

The positive electrode film does not exclude other positive electrode active materials than the positive electrode active material provided by the present application. For example, in some embodiments, the positive electrode film may further comprise at least one of a lithium transition metal oxide and a modified compound thereof. By way of example, the other positive electrode materials may include at least one of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and respective modified compounds thereof.

In some embodiments, the positive electrode film optionally further comprises a positive electrode conductive agent. The present application does not specifically limit the type of the positive electrode conductive agent, and as an example, the positive electrode conductive agent includes at least one of superconducting carbon, conductive graphite, acetylene black, carbon black, Ketjen black, carbon dots, carbon nanotubes, graphene, and carbon nanofibers.

In some embodiments, the positive electrode film optionally further comprises a binder. The present application does not specifically limit the type of the positive electrode binder, and as an example, the positive electrode binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin.

In some embodiments, the positive electrode current collector may be a metal foil or a composite current collector. As an example of a metal foil, an aluminum foil may be used. The composite current collector may include a polymeric material matrix and a metallic material layer formed on at least one surface of the polymeric material matrix. As an example, the metallic material may be selected from at least one of aluminum, aluminum alloy, nickel, nickel alloy, titanium, titanium alloy, silver, and silver alloy. As an example, the polymeric material matrix may be selected from polypropylene (PP), polyethylene terephthalate (PET), polybutylene terephthalate (PBT), polystyrene (PS), polyethylene (PE), etc.

The positive electrode film is usually made by applying a positive electrode slurry to the positive electrode current collector followed by drying and cold pressing. The positive electrode slurry is usually formed by dispersing the positive electrode active material, an optional conductive agent, an optional binder, and any other components in a solvent and stirring uniformly. The solvent may be N-methylpyrrolidone (NMP), but is not limited thereto.

### [Negative electrode plate]

In some embodiments, the negative electrode plate comprises a negative electrode current collector and a negative electrode film provided on at least one surface of the negative electrode current collector and comprising a negative electrode active material. For example, the negative electrode current collector has two surfaces opposite to each other in the direction of its own thickness, and the negative electrode film is provided on either or both of two opposite surfaces of the negative electrode current collector.

The negative electrode active material may be a negative electrode active material known in the art for use in secondary batteries. By way of example, the negative electrode active material includes, but is not limited to, at least one of carbon-based material, silicon-based material, tin-based material, and lithium titanate. The carbon-based material may include at least one of natural graphite, artificial graphite, soft carbon, and hard carbon. The silicon-based material may include at least one of elemental silicon, a silicon oxide, a silicon carbon composite, a silicon nitrogen composite, a silicon alloy material. The tin-based materials may include at least one of elemental tin, a tin oxide, and a tin alloy material. The present application is not limited to these materials, and other conventionally known materials that can be used as negative electrode active materials for secondary batteries may also be used. These negative electrode active materials can be used alone, or in combination of two or more materials.

In some embodiments, the negative electrode active material has a specific surface area of B0 in m²/g, with B0 being in the range of 0.5 to 4, optionally in the range of 1 to 2.5.

The negative electrode active material has an appropriate specific surface area, which can reduce the interfacial side reaction between the negative electrode active material and the non-aqueous electrolytic solution and reduce the gas production of the secondary battery; the negative electrode active material has an appropriate specific surface area, which can also enable it to have a suitable electrochemical reaction activity in order to enable the negative electrode plate and the secondary battery to have a high kinetic performance.

The specific surface area of the negative electrode active material has the common meaning in the art and may be determined by equipment and method known in the art. For example, with reference to GB/T 19587-2017, the nitrogen adsorption specific surface area analysis method can be used for testing, and the BET (BrunauerEmmett Teller) method can be used for calculating. The test can be carried out by Micromeritics Tri-Star 3020 specific surface area aperture analysis tester.

In some embodiments, the negative electrode film may optionally comprise a negative conductive agent. In the present application, the type of the negative electrode conductive agent is not particularly limited and, as an example, the negative conductive agent may include at least one of superconducting carbon, conductive graphite, acetylene black, carbon black, Ketjen black, carbon dots, carbon nanotubes, graphene, and carbon nanofibers.

In some embodiments, the negative electrode film may further optionally comprise a negative electrode binder. In the present application, the type of the negative electrode binder is not particularly limited and, as an example, the negative electrode binder may include at least one of styrene-butadiene rubber (SBR), water-soluble unsaturated resin SR-1B, aqueous acrylic resins (e.g., polyacrylic acid PAA, polymethacrylic acid PMAA, polyacrylic acid sodium salt PAAS), polyacrylamide (PAM), polyvinyl alcohol (PVA), sodium alginate (SA), and carboxymethyl chitosan (CMCS).

In some embodiments, the negative electrode film may optionally include other additives. As an example, the other additives may include thickeners, e.g., sodium carboxymethyl cellulose (CMC), and PTC thermistor material, etc.

In some embodiments, the negative electrode current collector may be a metal foil or a composite current collector. As an example of a metal foil, a copper foil may be used. The composite current collector may include a polymeric material matrix and a metallic material layer formed on at least one surface of the polymeric material matrix. As an example, the metallic material may be selected from at least one of copper, copper alloy, nickel, nickel alloy, titanium, titanium alloy, silver, and silver alloy. As an example, the polymeric material matrix may be selected from polypropylene (PP), polyethylene terephthalate (PET), polybutylene terephthalate (PBT), polystyrene (PS), polyethylene (PE), etc.

The negative electrode film is usually made by applying a negative electrode slurry to the negative electrode current collector followed by drying and cold pressing. The negative electrode slurry is usually formed by dispersing the negative electrode active material, an optional conductive agent, an optional binder, and any other optional additives in a solvent and stirring uniformly. The solvent may be N-methylpyrrolidone (NMP) and deionized water, but is not limited thereto.

The negative electrode plate does not exclude other additional functional layers than the negative electrode film. For example, in some embodiments, the negative electrode plate described in the present application further comprises a conductive primer (e.g. being composed of a conductive agent and a binder) sandwiched between the negative electrode current collector and the negative electrode film and disposed on the surface of the negative electrode current collector. In some other embodiments, the negative electrode plate described in this application further comprises a protective layer covering the surface of the negative electrode film.

### [Separator]

There is no particular limitation on the type of separator in the present application, and any well-known porous-structure separator with good chemical stability and mechanical stability may be used.

In some embodiments, materials of the separator may be at least one of glass fibers, non-woven fabrics, polyethylene, polypropylene and polyvinylidene fluoride. The separator may be a single-layer film or a multi-layer composite film. When the separator is a multi-layer composite film, materials of each layer may be the same or different.

In some embodiments, the positive electrode plate, the separator, and the negative electrode plate may be made into an electrode assembly by a winding process or a stacking process.

### [Non-aqueous electrolytic solution]

The secondary battery comprises a non-aqueous electrolytic solution, which is a bridge for the passage of lithium ions in the secondary battery, takes the burden of transporting lithium ions between the positive and negative electrodes in the secondary battery, and plays a crucial role in capacity exertion, cycling performance, storage performance, and safety performance of the secondary battery.

At present, the most widely used non-aqueous electrolytic solution system commercially is a mixed carbonate solution of lithium hexafluorophosphate, but lithium hexafluorophosphate has poor thermal stability at high temperatures, and will decompose at higher temperatures to form PF₅, which has strong Lewis acidity and will decompose organic solvents by interacting with lone pairs of electrons on the oxygen atoms of organic solvents molecules; moreover, PF₅ has a high sensitivity to the trace amount of water in non-aqueous electrolytic solution, and will generate HF when it meets water, thereby increasing the acidity of non-aqueous electrolytic solution, and thus easily eroding the positive electrode active material, and in particular, accelerating the leach out of manganese ions, increasing the interfacial side reactions, and affecting the cycling performance and storage performance of the secondary battery.

The inventors have further conducted a great deal of research and skillfully added a first additive shown in Formula 1 below to the non-aqueous electrolytic solution, which is capable of reducing the generation of HF and lowering the acidity of the non-aqueous electrolytic solution, thereby significantly improving the cycling performance and storage performance of the secondary battery.

In particular, the non-aqueous electrolytic solution according to the present application comprises a first additive comprising one or more of the compounds shown in Formula 1:

O=C=N-R₁-N=C=O Formula 1.

R₁ represents at least one of the group consisting of the following groups substituted or unsubstituted by Rₐ: C2∼C10 divalent alkyl, C2∼C10 divalent heteroalkyl, C6∼C18 divalent aryl, C7∼C18 divalent aryl alkyl, C7∼C18 divalent alkyl aryl, C8∼C18 divalent alkyl aryl alkyl, C13∼C18 divalent aryl alkyl aryl, C2∼C18 divalent heteroaryl, C3∼C18 divalent heteroarylalkyl, C3∼C18 divalent alkylheteroaryl, C4∼C18 divalent alkylheteroarylalkyl, C5∼C18 divalent heteroarylalkylheteroaryl, C3∼C18 divalent alcyl, C4∼C18 divalent alcyl alkyl, C4∼C18 divalent alkyl alcyl, C5∼C18 divalent alkyl alcyl alkyl, C7∼C18 divalent alcyl alkyl alcyl, C2∼C18 divalent heteroalcyl, C3∼C18 divalent heteroalcyl alkyl, C3∼C18 divalent alkyl heteroalcyl, C4∼C18 divalent alkyl heteroalcyl alkyl, and C5∼C18 divalent heteroalcyl alkyl heteroalcyl.

Rₐ comprises one or more selected from halogen atoms, -CN, -NCO, -OH, -COOH,-SOOH, carboxylate group, sulfonate group, sulfate group, C1∼C10 alkyl, C2∼C10 alkenyl, C2∼C10 alkynyl, C2∼C10 oxoalkyl, phenyl, and benzyl. Optionally, the halogen atom comprises one or more selected from a fluorine atom, a chlorine atom, a bromine atom. More optionally, the halogen atom is selected from a fluorine atom.

When the non-aqueous electrolytic solution comprises the first additive shown in Formula 1 above, the first additive can react with a trace amount of water in the non-aqueous electrolytic solution to form -NHCOOH, reduce the generation of HF, reduce the acidity of the non-aqueous electrolytic solution, and thereby reduce the leaching out of manganese ions, and the interfacial side effect. At the same time, the first additive shown in Formula 1 is also capable of generating a uniform and dense interfacial film on the surface of the negative electrode active material, reducing the reduction reaction of the leached manganese ions at the negative electrode. As a result, when the non-aqueous electrolytic solution contains the first additive shown in the above Formula 1, the cycling performance and the storage performance of the secondary battery can be significantly improved, and in particular, the high-temperature cycling performance and the high-temperature storage performance of the secondary battery can be significantly improved.

In some embodiments of the present application, R₁ represents at least one of the group consisting of the following groups substituted or unsubstituted by Rₐ: C2∼C10 alkylidene, C2∼C10 oxoalkylidene, C2∼C10 azidoalkylidene, phenylidene, o-phenylenedimethylene, m-phenylenedimethylene, p-phenylenedimethylene, monomethylphenylene, dimethylphenylene, trimethylphenylene, tetramethylphenylene, monoethylphenylene, diethylphenylene, triethylphenylene, tetraethylphenylene, biphenylene, terphenylene, quaterphenylene, diphenylmethyl, cyclobutylidene, o-cyclobutyldimethylene, m-cyclobutyldimethylene, p-cyclobutyldimethylene, cyclopentylidene, o-cyclopentyldimethylene, m- cyclopentyldimethylene, p- cyclopentyldimethylene, cyclohexylidene, monomethyl cyclohexylidene, dimethyl cyclohexylidene, trimethyl cyclohexylidene, tetramethyl cyclohexylidene, o-cyclohexyldimethylene, m-cyclohexyldimethylene, p-cyclohexyldimethylene, dicyclohexylmethane, methylcyclohexyl, naphthylene, anthrylene and perhydroanthrylene. Optionally, Rₐ comprises one or more selected from a fluorine atom, -CN, -NCO, -OH, -COOH,-SOOH, carboxylate group, sulfonate group, sulfate group, C1∼C10 alkyl, C2∼C10 alkenyl, C2∼C10 alkynyl, C2~C10 oxoalkyl, phenyl and benzyl.

When R₁ represents the above substituent group, it is capable of further reducing the generation of HF and lowering the acidity of the non-aqueous electrolytic solution, and at the same time helping to generate a uniform, dense interfacial film with low impedance on the surface of the negative electrode active material, whereby the improvement effect on the cycling performance and the storage performance of the secondary battery can be further enhanced.

In some embodiments of the present application, the first additive comprises at least one of the following compounds:

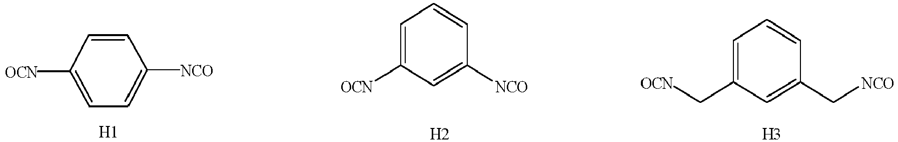

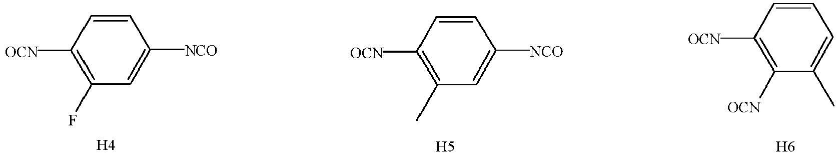

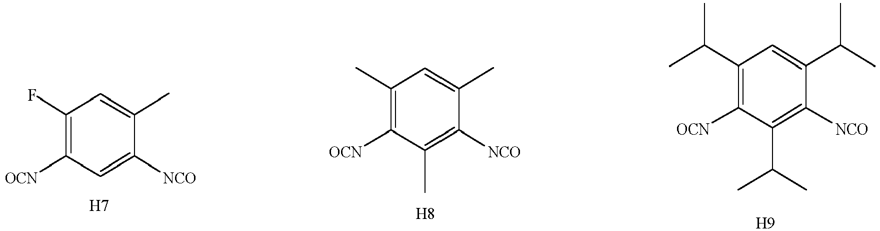

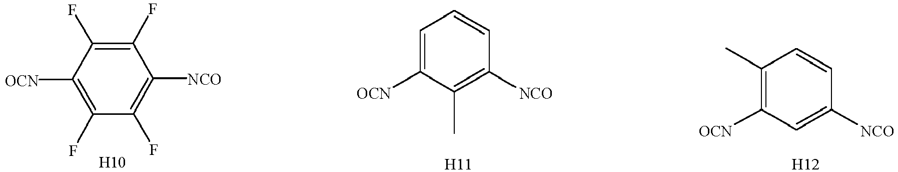

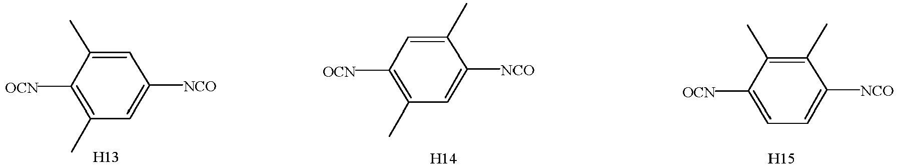

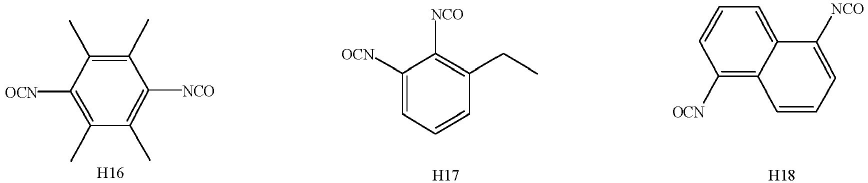

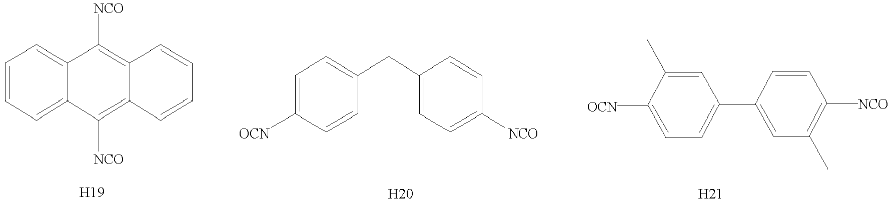

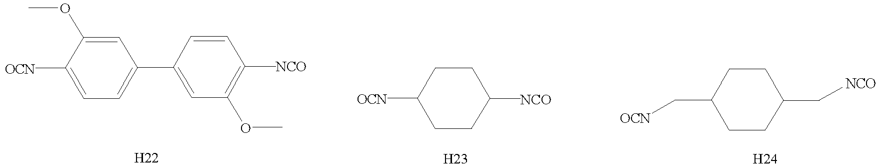

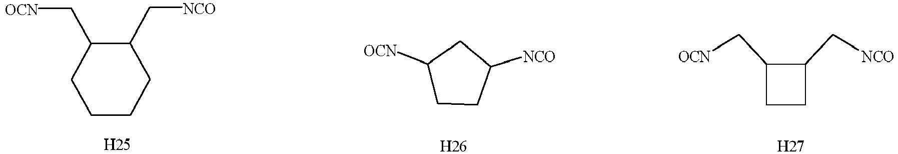

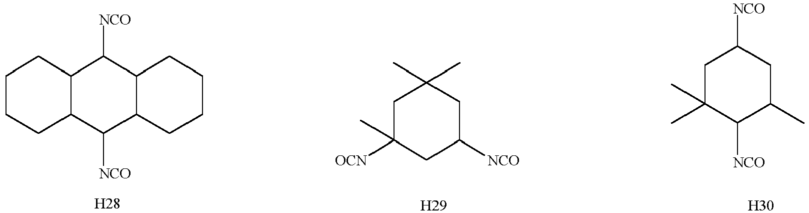

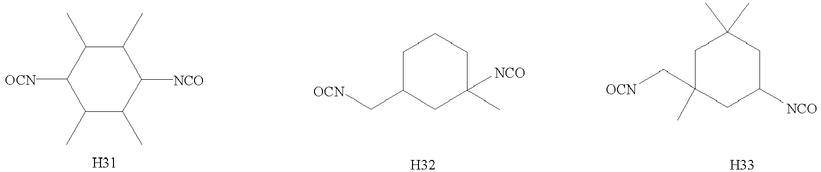

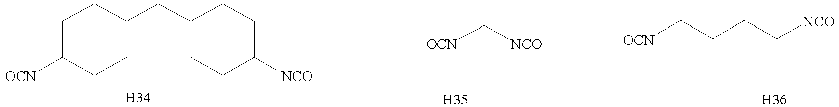

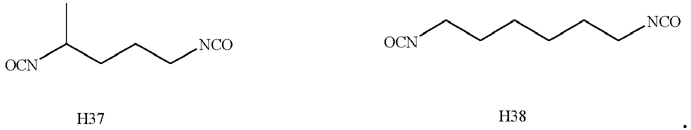

The inventors found in the course of their research that using at least one of the above compounds H1 to H38 as a first additive can further reduce the generation of HF and lower the acidity of the non-aqueous electrolytic solution, and at the same time help to generate a uniform and dense interfacial film with low impedance on the surface of the negative electrode active material, whereby the effect of improving the cycling performance and storage performance of the secondary battery can be further enhanced.

The inventor also found that when the non-aqueous electrolytic solution contains too much of the first additive, interfacial impedance on the negative electrode will increase, and capacity exertion and rate performance of the secondary battery will be affected. Therefore, the content of the first additive in the non-aqueous electrolytic solution should not be too high. In some embodiments, the content of the first additive is W1% by weight, W1 being from 0.01 to 20, optionally from 0.1 to 10, and more optionally from 0.3 to 5, based on the total weight of the non-aqueous electrolytic solution. When the first additive content is within the above range, it can reduce the generation of HF and lower the acidity of the non-aqueous electrolytic solution without deteriorating the negative electrode interfacial impedance, which in turn can significantly improve the cycling performance and the storage performance of the secondary battery without affecting the capacity exertion and the rate performance of the secondary battery.

In some embodiments, the non-aqueous electrolytic solution further comprises a second additive, the second additive comprising one or more of ethylene sulfate (DTD), lithium difluorophosphate (LiPO₂F₂), bisoxalatodifluorophosphate, R₂[FSO₃⁻]ₐ, and R₂[C_{b}F_{2b+1}SO₃⁻]ₐ, a being an integer from 1 to 5 and b being an integer from 1 to 6, and R₂ representing a metal cation or an organic group cation.

The second additive contributes to the formation of a low-impedance interfacial film on the surface of the negative electrode active material, thereby improving the capacity exertion and rate performance of the secondary battery. Thus, when the non-aqueous electrolytic solution contains both the first additive and the second additive, it helps to significantly improve the cycling performance and storage performance of the secondary battery, while enhancing the capacity exertion and rate performance of the secondary battery.
a represents the average valence of a metal cation or an organic group cation R₂. b represents an integer from 1 to 6, e.g., b represent 1, 2, 3, 4, 5, or 6; optionally, b represents 1, 2, or 3.

Optionally, the metal cation comprises one or more selected from Li⁺, Na⁺, K⁺, Rb⁺, Cs⁺, Mg²⁺, Ca²⁺, Ba²⁺, Al³⁺, Fe²⁺, Fe³⁺, Cu²⁺, Ni²⁺ and Ni³⁺.

Optionally, the organic group cation comprises one or more selected from NH₄⁺, N(CH₃)₄⁺, and N(CH₂CH₃)₄⁺.

Optionally, R₂[FSO₃⁻]a represents lithium fluorosulfonate LiFSO₃.

Optionally, R₂[C_{b}F_{2b+1}SO₃⁻]a represents lithium trifluoromethanesulfonate LiCF₃SO₃.

The inventors also found in the course of the research that when the non-aqueous electrolytic solution contains an excessive amount of the second additive, its effect of lowering the negative electrode interfacial impedance does not further increase, while the viscosity and conductivity of the non-aqueous electrolytic solution may be affected, and thus the capacity exertion and rate performance of the secondary battery may also be affected. Therefore, the content of the second additive in the non-aqueous electrolytic solution should not be too excessive. In some embodiments, the content of the second additive is W2% by weight, W2 being from 0.01 to 20, optionally from 0.1 to 10, more optionally from 0.3 to 5, based on the total weight of the non-aqueous electrolytic solution. When the content of the second additive is in the suitable range, it can effectively improve the capacity exertion and rate performance of the secondary battery.

The inventors have also found in the course of their research that the ratio of the content of the first additive (W1 wt%), to the content of the second additive (W2 wt%), also affects the electrochemical performance of the secondary battery. In some embodiments, W1/W2 is from 0.01 to 20. Optionally, W1/W2 is from 0.01 to 10, from 0.1 to 10, from 0.1 to 8, from 0.1 to 5, from 0.2 to 5, from 0.5 to 5, or from 1 to 5. When W1/W2 is in a suitable range, the synergistic effect of the two additive can be better utilized, whereby the effect of improving the cycling performance and storage performance of the secondary battery can be further enhanced, and at the same time enhance the capacity exertion and rate performance of the secondary battery. The following can be effectively avoided: when W1/W2 is large, the second additive cannot effectively reduce the negative electrode interfacial impedance, and the further improvement effect on the capacity and rate performance of the secondary battery may not be significant; when W1/W2 is small, the generation of HF cannot be significantly reduced and the acidity of the non-aqueous electrolytic solution cannot be reduced, and the improvement effect on the cycling performance and storage performance of the secondary battery may not be significant.

In some embodiments, the secondary battery has a liquid injection coefficient of Q0 in g/Ah with Q0 satisfying in the range of 2.5 to 4.0.

In some embodiments, the first additive has a content of W1% by weight, the second additive has a content of W2% by weight, the secondary battery has an initial capacity of D0 in mAh/g, the secondary battery has a liquid injection coefficient of Q0 in g/Ah, and the negative electrode active material has a specific surface area of B0 in m²/g, which satisfy the relationship of [(W1% + W2%)×D0×Q0]/B0 of 0.5 to 100, optionally 1 to 50. When [(W1% + W2%)×D0×Q0]/B0 is in the above range, it is capable of significantly enhancing the improvement effect on the cycling performance and storage performance of the secondary battery, while enhancing the capacity exertion and rate performance of the secondary battery. In addition, the following can be effectively avoided: when [(W1%+W2%)×D0×Q0]/B0 is small, there is not enough first additive and second additive to form a film on the surface of the negative electrode active materials, and thus the generation of HF and the reduction of the acidity of the non-aqueous electrolytic solution and the negative electrode interfacial impedance cannot be significantly reduced, and thus the further improvement of the cycling and storage performance of the secondary battery is not significant; when [(W1%+W2%)×D0×Q0]/B0 is large, the negative electrode interfacial impedance increases, which affects the capacity exertion and rate performance of the secondary battery.

An initial capacity D0 in mAh/g of secondary batteries can be obtained by the following method. A secondary battery is charged to a charge cut-off voltage at 0.33C at a constant temperature of 25°C and then is charged at constant voltage until current is less than or equal to 0.05mA. After that, the battery is allowed to stand for 5 minutes, and then is discharged to a discharge cut-off voltage at 0.33C, at which, a ratio of the discharge capacity to mass of the positive electrode active material is an initial capacity D0 in mAh/g of the secondary battery. In the test method of the present application, the charge and discharge cut-off voltage of the secondary battery may be 2.5V-4.3V.

In some embodiments, the non-aqueous electrolytic solution further comprises a third additive comprising one or more of a cyclic carbonate compound containing an unsaturated bond, a halogen-substituted cyclic carbonate compound, a sulfate compound, a sulfite compound, a sultone compound, a disulfonate compound, a nitrile compound, a phosphonitrile compound, an aromatic hydrocarbon and halogenated aromatic hydrocarbon compound, an acid anhydride compound, a phosphite compound, a phosphate compound, and a borate compound. When the non-aqueous electrolytic solution comprises both the first additive and the third additive or comprises the first additive, the second additive and the third additive at the same time, the third additive helps to form a more dense and stable interfacial film on the surface of the positive electrode and/or negative electrode active materials, so as to be able to further enhance at least one of cycling performance, storage performance, and rate performance of secondary batteries. In some embodiments, the third additive is present in a content of W3% by weight, with W3 being from 0.01 to 10, optionally from 0.1 to 10, more optionally from 0.3 to 5, based on the total weight of the non-aqueous electrolytic solution.

The present application does not specifically limit the type of the third additive as long as it does not detract from the main idea of the present application, e.g., the third additive may be selected in any ratio from the specific substances described below.

### (a) Cyclic carbonate compound containing carbon-carbon unsaturated bonds

The cyclic carbonate compound containing carbon-carbon unsaturated bonds may comprise one or more of the compounds shown in Formula 2-1. R₃ represents C1-C6 alkylene group with alkenyl or alkynyl substituents on its branched chain, or a substituted or unsubstituted C2-C6 straight-chain alkenylene group, wherein the substituent is one or more selected from a halogen atom, C1-C6 alkyl group, and a C2-C6 alkenyl group.

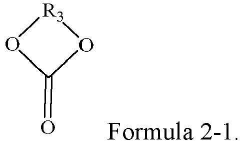

Optionally, the cyclic carbonate compound containing a carbon-carbon unsaturated bond may include, but is not limited to, one or more of the following compounds.

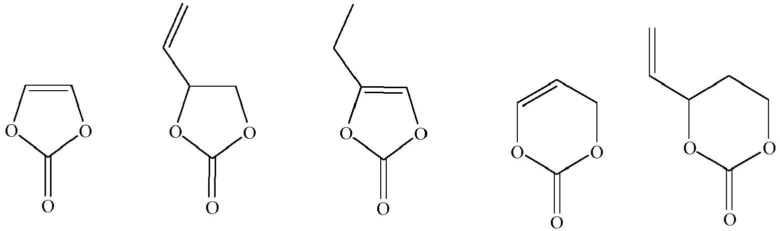

### (b) Halogen-substituted cyclic carbonate compound

The halogen-substituted cyclic carbonate compound may include one or more of the compounds shown in Formula 2-2. R₄ represents a halogen-substituted C1-C6 alkylene group, or a halogen-substituted C2-C6 alkenylene group.

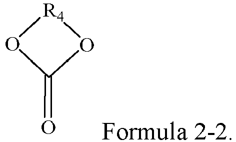

Optionally, the halogen-substituted cyclic carbonate compound may include, without being limited to, one or more of fluoro ethylene carbonate (FEC), fluoro propylene carbonate (FPC), trifluoro propylene carbonate (TFPC), and trans or cis-4,5-difluoro-1,3-dioxolan-2-one (hereinafter, both are collectively referred to as DFEC).

### (c) Sulfate compound

The sulfate compound may be a cyclic sulfate compound other than ethylene sulfate (DTD). The other cyclic sulfate compounds may include one or more of the compounds shown in Formulae 2-3. R₅ represents a substituted or unsubstituted C1∼C6 alkylene, a substituted or unsubstituted C2∼C6 alkenylene group, wherein the substituent group is selected from one or more of a halogen atom, a C1∼C3 alkyl group, and a C2∼C4 alkenyl group.

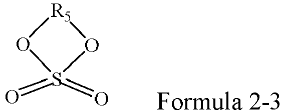

Optionally, the sulfate compound may comprise one or more of the following compounds, but not limited thereto:

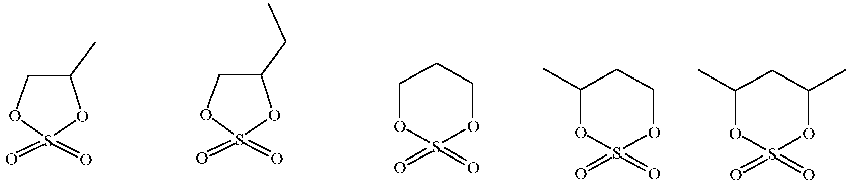

Further optionally, the sulfate compound comprises one or more of trimethylene sulfate (abbreviated as TMS), and 1,2-propylene sulfate (abbreviated as PLS).

### (d) Sulfite compound

The sulfite compound may be a cyclic sulfite compound, and specifically may include one or more of the compounds shown in Formulas 2-4. R₆₉ represents substituted or unsubstituted C1-C6 alkylene, substituted or unsubstituted C2-C6 alkenylene, wherein the substituent is one or more selected from a halogen atom, C1-C3 alkylene, and C2-C4 alkenylene.

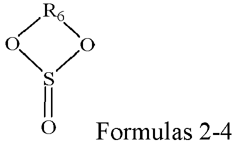

Optionally, the sulfite compound may include one or more of ethylene sulfite (ES), propylene sulfite (PS), butylene sulfite (BS).

### (e) Sultone compound

The sultone compound comprises one or more of the compounds represented by Formula 2-5, in which R₇ represents a substituted or unsubstituted C₁-C₆ alkylene group or a substituted or unsubstituted C₂-C₆ alkenylene group, wherein the substituent is selected from one or more of a halogen atom, a C₁-C₃ alkyl group, and a C₂-C₄ alkenyl group.

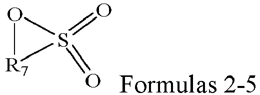

Optionally , the sultone compound may comprise one or more of the following compounds, but not limited thereto:

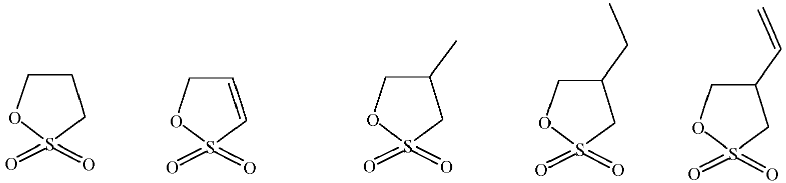

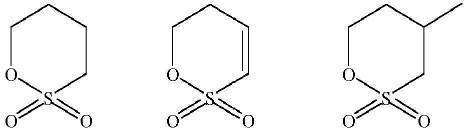

Further optionally, the sultone compound may comprise one or more of 1,3-propane sultone (abbreviated as PS) and 1,3-propene sultone (abbreviated as PES).

### (f) Disulfonate compound

The disulfonate compound is a compound containing two sulfonic groups (-S(=O)₂O-) Optionally, the disulfonate compound is a methylene disulfonate compound.

The methylene disulfonate compound may comprise one or more of the compounds represented by Formula 2-6, in which R₈, R₉, R₁₀ and R₁₁ each independently represent a hydrogen atom, a halogen atom, a substituted or unsubstituted C₁-C₁₀ alkyl group, or a substituted or unsubstituted C₂-C₁₀ alkenyl group, wherein the substituent is selected from one or more of a halogen atom, a C₁-C₃ alkyl group, and a C₂-C₄ alkenyl group.

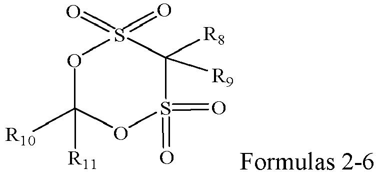

Optionally , the disulfonate compound may comprise one or more of the following compounds, but not limited thereto:

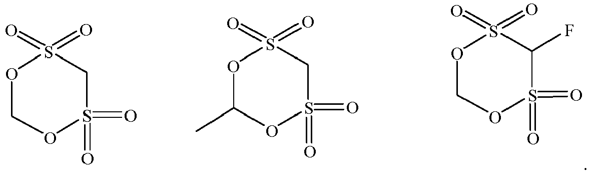

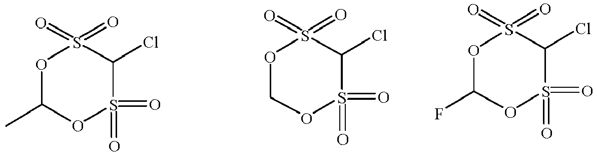

### Further optionally, the disulfonate compound may be methylene methanedisulfonate. (g) Nitrile compound

The nitrile compound may be a dinitrile or trinitrile compound. Optionally, the nitrile compound may comprise one or more of the compounds shown in Formulae 2-7 and Formulae 2-8. R₁₂ represents substituted or unsubstituted C1-C12 alkylene, substituted or unsubstituted C1-C12 oxa-alkylene, substituted or unsubstituted C2-C12 alkenylene, or substituted or unsubstituted C2-C12 alkynylene, and R₁₃ to R₁₅ each independently represent, substituted or unsubstituted C0-C12 alkylene, substituted or unsubstituted C1-C12 oxa-alkylene, substituted or unsubstituted C2-C12 alkenylene, or substituted or unsubstituted C2-C12 alkynylene, wherein the substituent is one or more selected from a halogen atom, a nitrile group, C1-C6 alkyl, C2-C6 alkenyl, and C1-C6 alkoxy.

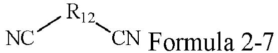

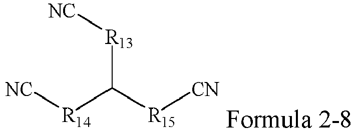

Optionally, the nitrile compound may include one or more of ethanedinitrile, propanedinitrile, butanedinitrile, pentanedinitrile, hexanedinitrile, heptanedinitrile, octanedinitrile, nonanedinitrile, decanedinitrile, undecanedinitrile, dodecanedinitrile, tetramethylsuccinonitrile, methylpentanedinitrile, butadienedinitrile, 2-pentenedinitrile, hex-2-enedinitrile, hex-3-enedinitrile, oct-4-enedinitrile, oct-4-ynedinitrile, 1,2,3-propane-tricarbonitrile, 1,3,5-pentanetricarbonitrile, and 1,3,6-hexanetrinitrile.

### (h) Phosphonitrile compound

The phosphonitrile compound may be a cyclic phosphonitrile compound. The cyclic phosphonitrile compound may include one or more of methoxy pentafluorocyclotriphosphonitrile, ethoxy pentafluorocyclotriphosphonitrile, phenoxy pentafluorocyclotriphosphonitrile, and ethoxy heptafluorocyclotetraphosphonitrile. Optionally, the cyclic phosphonitrile compound may include one or more of methoxy pentafluorocyclotriphosphonitrile, ethoxy pentafluorocyclotriphosphonitrile, phenoxy pentafluorocyclotriphosphonitrile. Further optionally, the cyclic phosphonitrile compound may include methoxy pentafluorocyclotriphosphonitrile, ethoxy pentafluorocyclotriphosphonitrile, or a combination thereof.

### (i) Aromatic hydrocarbon and halogenated aromatic hydrocarbon compound

The aromatic hydrocarbon and halogenated aromatic hydrocarbon compound may include one or more of cyclohexylbenzene, fluorinated cyclohexylbenzene compounds (e.g., 1-fluoro-2-cyclohexylbenzene, 1-fluoro-3-cyclohexylbenzene, 1-fluoro-4-cyclohexylbenzene), t-butylbenzene, t-amylbenzene, 1-fluoro-4-t-butylbenzene, biphenyl, terphenyl (ortho-, meta-, para-), diphenyl ether, fluoro-benzene, difluorobenzene (ortho-, meta-, para-), anisole, 2,4-difluoroanisole, partial hydrides of terphenyl (e.g., 1,2-dicyclohexylbenzene, 2-phenylbicyclohexyl, 1,2-diphenylcyclohexane, o-cyclohexylbiphenyl). Optionally, the aromatic hydrocarbon and halogenated aromatic hydrocarbon compound may include one or more of biphenyl, terphenyl (ortho-, meta-, para-), fluorobenzene, cyclohexylbenzene, t-butylbenzene, t-amylbenzene. Further optionally, the aromatic hydrocarbon and halogenated aromatic hydrocarbon compound may include one or more of biphenyl, o-terphenyl, fluorobenzene, cyclohexylbenzene, and tert-pentylbenzene.

### (j) Acid anhydride compound

The acid anhydride compound may be a chain acid anhydride or a cyclic acid anhydride. Specifically, the acid anhydride compound may include one or more of acetic anhydride, propionic anhydride, succinic anhydride, maleic anhydride, 2-allyl succinic anhydride, glutaric anhydride, itaconic anhydride, and 3-sulfo-propionic anhydride. Optionally, the acid anhydride compound may include one or more of succinic anhydride, maleic anhydride, and 2-allyl succinic anhydride. Further optionally, the acid anhydride compound may include succinic anhydride, 2-allyl succinic anhydride, or a combination thereof.

### (k) Phosphite compound

The phosphite compound may be a silane phosphite compound, and specifically may include one or more of the compounds shown in Formulae 2-9, with R₁₆ to R₂₄ each independently representing halogen-substituted or unsubstituted C1-C6 alkyl.

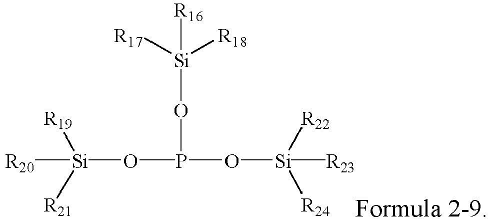

Optionally, the silane phosphite compound may include, but is not limited to, one or more of the following compounds.

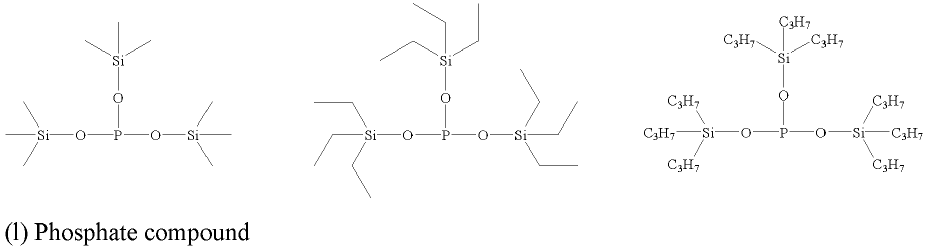

The phosphate compound may be a silane phosphate compound, and specifically may include one or more of the compounds shown in Formula 2-10, with R₂₅ to R₃₃ each independently representing halogen-substituted or unsubstituted C1-C6 alkyl.

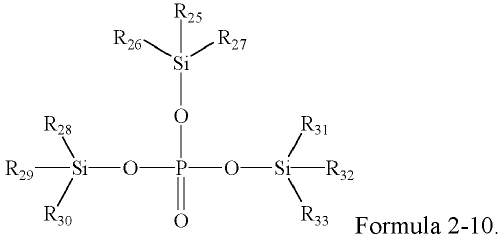

Optionally, the silane phosphate compound may include, but is not limited to, one or more of the following compounds.

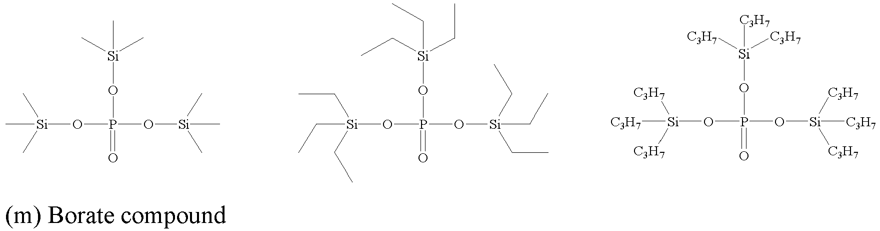

The borate compound may be a silane borate compound, and specifically may include one or more of the compounds shown in Formula 2-11, with R₃₄ to R₆₈ each independently denoting halogen-substituted or unsubstituted C1-C6 alkyl.

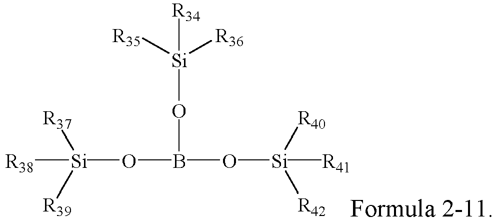

Optionally, the silane borate compound may include, but is not limited to, one or more of the following compounds:

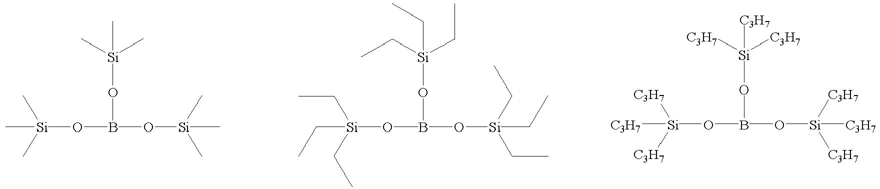

Optionally, the third additive may comprise one or more of vinylidene carbonate (VC), vinyl ethylene carbonate (VEC), and fluoroethylene carbonate (FEC). These third additives are electrochemical reduction additives, and their reduction potential is higher than that of an organic solvent, so that electrochemical reduction can preferentially occur on the surface of the negative electrode active materials to form an interfacial membrane with excellent performances, thereby reducing destruction of the interfacial membrane by the organic solvent, and thus the secondary battery adopting the same can have better electrochemical performance and safety performance.

The non-aqueous electrolytic solution further comprises a lithium salt and an organic solvent. The present application has no particular limitation on the types of the lithium salt and the organic solvent, which may be selected according to actual needs.

As an example, the organic solvent may include one or more of chain carbonate, cyclic carbonate, carboxylic acid ester. Among them, the present application has no specific limitation on the types of the chain carbonate, the cyclic carbonate, and the carboxylic acid ester, which can be selected according to actual needs. Optionally, the organic solvent includes one or more of dimethyl carbonate (DMC), diethyl carbonate (DEC), dipropyl carbonate (DPC), methyl ethyl carbonate (EMC), methyl propyl carbonate (MPC), ethyl propyl carbonate (EPC), ethylene carbonate (EC), propylene carbonate (PC), butylene carbonate (BC), gamma-butyrolactone (GBL), methyl formate (MF), ethyl formate (EF), methyl acetate (MA), ethyl acetate (EA), propyl acetate (PA), methyl propionate (MP), ethyl propionate (EP), propyl propionate (PP), and tetrahydrofuran (THF).

As an example, the lithium salt may include one or more of LiN(CₛF₂ₛ₊₁SO₂)(CₜF₂ₜ₊₁SO₂), LiPF₆, LiBF₄, LiBOB, LiAsF₆, Li(FSO₂)₂N, LiCF₃SO₃, and LiClO₄, with s and t being natural numbers. When the non-aqueous electrolytic solution includes the lithium salt described above, this helps to form a dense, stable and low-impedance interfacial film on the surface of the positive electrode and/or negative electrode active materials, and effectively improves at least one of cycle performance, storage performance and rate performance of the secondary battery.

The cyclic carbonate has a higher dielectric constant, which facilitates dissociation of lithium salts. In some embodiments, the cyclic carbonate may be present in a content of 20 wt% or more, optionally from 20 wt% to 80 wt%, more optionally from 20 wt% to 50 wt%, based on the total weight of the organic solvent. Optionally, the cyclic carbonate includes one or more of ethylene carbonate (EC), propylene carbonate (PC), and butylene carbonate (BC).

The chain carbonate has a smaller dielectric constant and a weaker ability to dissociate lithium salts, but has a low viscosity and good fluidity and thus it can increase migration rate of lithium ions. In some embodiments, the chain carbonate may be present in a content of 10 wt% or more, optionally from 10 wt% to 80 wt%, based on the total weight of the organic solvent. Optionally, the chain carbonate comprises one or more of dimethyl carbonate (DMC), diethyl carbonate (DEC), dipropyl carbonate (DPC), methyl ethyl carbonate (EMC), methyl propyl carbonate (MPC), and ethyl propyl carbonate (EPC).

Carboxylic acid esters have advantages of low viscosity and high dielectric constant and thus it may enhance conductivity of a non-aqueous electrolytic solution. In some embodiments, the carboxylic acid ester may be present in a content of from 0 wt% to 70 wt%, optionally from 0 wt% to 60 wt%, based on the total weight of the organic solvent. Optionally, the carboxylic acid ester comprises one or more of methyl formate (MF), ethyl formate (EF), methyl acetate (MA), ethyl acetate (EA), propyl acetate (PA), methyl propionate (MP), ethyl propionate (EP), and propyl propionate (PP).

With increasing the content of lithium salts, the total number of migratable lithium ions increases, but at the same time, viscosity of the non-aqueous electrolytic solution will also increase, and migration rate of lithium ions slows down instead. Thus, an optimal value for the content of lithium salts occurs. In some embodiments, the lithium salt may be present in a content of from 6 wt% to 39 wt%, optionally from 10 wt% to 31 wt%, more optionally from 11 wt% to 24 wt%, still more optionally from 12 wt% to 20 wt%, based on the total weight of the non-aqueous electrolytic solution.

The non-aqueous electrolytic solution of the present application can be prepared in accordance with conventional methods in the field. For example, the additives, the organic solvent, the lithium salt and the like can be mixed well to obtain a non-aqueous electrolytic solution. There is no particular limitation on the order of addition of each material. For example, the additives, the lithium salt and the like can be added to the organic solvent and mixed homogeneously to obtain a non-aqueous electrolytic solution.

In the present application, components and their contents in the non-aqueous electrolytic solution can be determined according to methods conventional in the art. For example, they can be determined by gas chromatography-mass spectrometry (GC-MS), ion chromatography (IC), liquid chromatography (LC), nuclear magnetic resonance spectrometry (NMR) and the like.

It should be noted that the non-aqueous electrolytic solution of the present application can also be obtained from a secondary battery. An exemplary method of obtaining a non-aqueous electrolytic solution from a secondary battery comprises the step of discharging the secondary battery to a discharge cut-off voltage and then centrifuging it, after which an appropriate amount of liquid obtained from centrifugation is taken for testing.

### [Outer package]

In some embodiments, the secondary battery may include an outer package. The outer package may be used to encapsulate the electrode assembly and the non-aqueous electrolytic solution.

In some embodiments, the outer package of the secondary battery may be a hard case, such as a hard plastic case, an aluminum case, a steel case, and the like. The outer package of the secondary battery may also be a soft package, such as a pouch-type soft package. The material of the soft bag can be plastic, such as at least one of polypropylene (PP), polybutylene terephthalate (PBT), and polybutylene succinate (PBS).

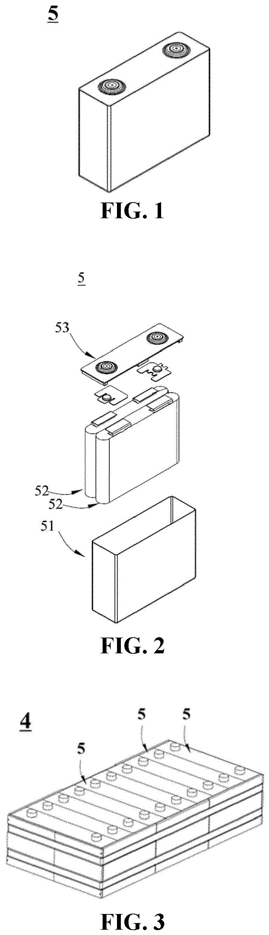

The shape of the secondary battery is not particularly limited in the present application, and it may be cylindrical, square, rectangular or any other shape. FIG. 1 is a schematic diagram of a secondary battery 5 of a rectangular structure as an example.

In some embodiments, as shown in FIG. 2, the outer package may include a casing 51 and a cover plate 53, wherein the casing 51 may include a bottom plate and side plates connected to the bottom plate, and the bottom plate and the side plates are enclosed to form an accommodating cavity. The casing 51 has an opening communicating with the accommodating cavity, and the cover plate 53 is used to cover the opening to close the accommodating cavity. A positive electrode plate, a separator, and a negative electrode plate may be made into an electrode assembly 52 by a winding process or a laminating process. The electrode assembly 52 is packaged in the accommodating cavity, and the non-aqueous electrolytic solution is infiltrated in the electrode assembly 52. The number of electrode assemblies 52 contained in the secondary battery 5 may be one or more, and may be adjusted according to requirements.

A process for preparing the secondary battery of the present application is well known in the art. In some embodiments, a positive electrode plate, a separator, a negative electrode plate and a non-aqueous electrolytic solution may be assembled into a secondary battery. As an example, a positive electrode plate, a separator, and a negative electrode plate can be made into an electrode assembly by a winding process or a stacking process, and the electrode assembly can be placed in an outer package and is subjected to drying, to which a non-aqueous electrolytic solution is injected. After vacuum encapsulation, resting, chemical formation, and shaping process, a secondary battery can be obtained.

### Battery Module

In some embodiments, the secondary batteries according to the present application can be assembled into a battery module, and the number of secondary batteries contained in the battery module can be more than one, and the specific number can be adjusted according to application and capacity of the battery module.

Fig. 3 is a schematic diagram of the battery module 4 as an example. As shown in FIG. 3, in the battery module 4, a plurality of secondary batteries 5 may be arranged in sequence along the longitudinal direction of the battery module 4. Certainly, they can also be arranged in any other manner. Furthermore, a plurality of secondary batteries 5 can be fixed with fasteners.

Optionally, the battery module 4 may further include a housing having an accommodating space in which a plurality of secondary batteries 5 are accommodated.

### Battery pack

In some embodiments, the above-mentioned battery modules can also be assembled into a battery pack, and the number of battery modules included in the battery pack can be adjusted according to the application and capacity of the battery pack.

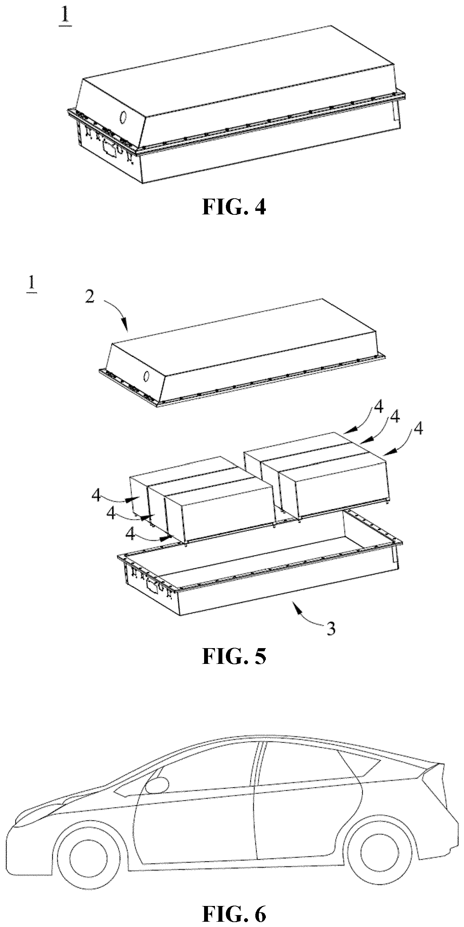

Figs. 4 and 5 are schematic diagrams of the battery pack 1 as an example. As shown in Figs. 4 and 5, the battery pack 1 may include a battery case and a plurality of battery modules 4 provided in the battery case. The battery box includes an upper case body 2 and a lower case body 3, and the upper case body 2 is used to cover the lower case body 3 to form a closed space for accommodating the battery modules 4. A plurality of battery modules 4 may be arranged in the battery case in any manner.

### Electrical device

The present application further provides an electrical device comprising at least one of the secondary battery, battery module, and battery pack of the present application. The secondary battery, battery module or battery pack can be used as a power source of the electrical device, and can also be used as an energy storage unit of the electrical device. The electrical device can be, but is not limited to, a mobile device (e.g., a mobile phone, a notebook computer, and the like), an electric vehicle (e.g., a pure electric vehicle, a hybrid electric vehicle, a plug-in hybrid electric vehicle, an electric bicycle, an electric scooter, an electric golf vehicle, an electric truck and the like), an electric train, a ship, a satellite, an energy storage system, and the like.

The electrical device can select a secondary battery, a battery module or a battery pack according to its usage requirements.

Fig. 6 is a schematic diagrams of an electrical device as an example. The electrical device is a pure electric vehicle, a hybrid electric vehicle, or a plug-in hybrid electric vehicle. In order to meet high power and high energy density requirements of the electrical device, a battery pack or a battery module can be used.

As another example, the electrical device may be a mobile phone, a tablet computer, a notebook computer, and the like. The electric device is generally required to be light and thin, and a secondary battery can be used as a power source.

### Examples

The following examples more specifically describe the content disclosed in the present application, and these examples are only used for explanatory description, because various modifications and changes within the scope of the present disclosure are apparent to those skilled in the art. Unless otherwise stated, all parts, percentages, and ratios described in the following examples are based on mass, and all reagents used in the examples are commercially available or synthesized according to conventional methods and can be directly used without further treatment, and all instruments used in the examples are commercially available.

### Example 1

### 1) Preparation of positive electrode active material

Preparation of doped manganese oxalate: 1.3 mol of MnSO₄·H₂O and 0.7 mol of FeSO₄·H₂O were mixed thoroughly in a mixer for 6 hours. The mixture was transferred to a reaction kettle and 10 L of deionized water and 2 mol of oxalic acid dihydrate (as oxalic acid) were added. The reaction kettle was heated to 80°C and stirred at 600 rpm for 6 h. The reaction ended (no bubbles were generated) to obtain a suspension of Fe doped manganese oxalate. Then the suspension was filtered and the resulting filter cake was dried at 120°C, after which it was ground to obtain particles of Fe doped manganese oxalate with a median particle size Dv₅₀ of about 100 nm.

Preparation of doped lithium manganese phosphate: 1 mol of the above particles of manganese oxalate, 0.497 mol of lithium carbonate, 0.001 mol of Mo(SO₄)₃, aqueous phosphoric acid solution containing 0.999 mol of phosphoric acid at a concentration of 85%, 0.001 mol of H₄SiO₄, 0.0005 mol of NH₄HF₂, and 0.005 mol of sucrose were added to 20 L of deionized water. The mixture was transferred to a sanding mill and well ground and stirred for 10 hours to obtain a slurry. The slurry was transferred to a spray drying equipment for spray drying granulation, with a drying temperature of 250°C for 4 hours to obtain granules. The above powder was sintered at 700°C for 10 hours in a protective atmosphere of nitrogen (90 vol%) + hydrogen (10 vol%) to obtain Li_{0.994}Mo_{0.001}Mn_{0.65}Fe_{0.35}P_{0.999}Si_{0.001}O_{3.999}F_{0.001}. The elemental content can be detected by Inductively Coupled Plasma Emission Spectroscopy (ICP).

### 2) Preparation of button battery

The positive electrode active material prepared above, polyvinylidene fluoride (PVDF), and acetylene black were added to N-methyl pyrrolidone (NMP) at a weight ratio of 90: 5: 5 and stirred in a drying room to make a slurry. The above slurry was applied to an aluminum foil, dried and cold pressed to form a positive electrode plate. The coating amount was 0.2g/cm² and the compaction density was 2.0g/cm³.

In an argon atmosphere glove box (H₂O<0.1 ppm, O₂<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆ and 1 wt% (based on the total weight of the non-aqueous electrolytic solution) of compound H38 were dissolved, and the resulting mixture was stirred homogeneously, to obtain a non-aqueous electrolytic solution.

Lithium sheet was used as a negative electrode, and it was assembled together with the above prepared positive electrode plate and non-aqueous electrolytic solution in a button battery box to form a button battery (hereinafter also referred to as "button").

### 3) Preparation of full battery

The positive electrode active material prepared above, polyvinylidene fluoride (PVDF), and acetylene black were added at a weight ratio of 92: 2.5: 5.5 to a solvent system of N-methyl pyrrolidone (NMP) and mixed homogeneously. The resulting mixture was applied to an aluminum foil, dried and cold pressed to obtain a positive electrode plate. The coating amount was 0.4g/cm² and the compaction density was 2.4g/cm³.

Artificial graphite as a negative electrode active material, hard carbon, acetylene black as a conductive agent, styrene butadiene rubber (SBR) as a binder, sodium carboxymethyl cellulose (CMC) as a thickener at a weight ratio of 90:5:2:2:1 were mixed homogeneously in deionized water. The resulting mixture was uniformly applied to a copper foil, dried, and cold pressed to obtain a negative electrode plate. The coating amount was 0.2g/cm² and the compaction density was 1.7g/cm³. The specific surface area of the negative electrode active material was 1.0 m2/g.

A porous polymer film of polyethylene (PE) was used as a separator. The positive electrode plate, separator and negative electrode plate were stacked in order, so that the separator was sandwiched between the positive and negative electrodes for isolation, and then they were wound to form an electrode assembly. The electrode assembly was placed in an outer package, filled with the same electrolytic solution as that in the above-mentioned preparation of button battery, and encapsulated to obtain a full battery. The full battery had a liquid injection coefficient of 3.5 g/Ah.

### Example 2

Example 2 was the same as Example 1, with the exception that in "1) Preparation of positive electrode active material", the amount of Li₂CO₃ was adjusted to 0.4885 mol, Mo(SO₄)₃ was replaced with MgSO₄, the amount of FeSO₄·H₂O was adjusted to 0.68 mol, 0.02 mol of Ti(SO₄)₂ was added in the preparation of doped manganese oxalate, and H₄SiO₄ was replaced with HNO₃.

### Example 3

Example 3 was the same as Example 1, with the exception that in "1) Preparation of positive electrode active material", the amount of Li₂CO₃ was adjusted to 0.496 mol, Mo(SO₄)₃ was replaced with W(SO₄)₃, and H₄SiO₄ was replaced with H₂SO₄.

### Example 4

Example 4 was the same as Example 1, with the exception that in "1) Preparation of positive electrode active material", the amount of Li₂CO₃ was adjusted to 0.4985 mol, 0.001 mol of Mo(SO₄)₃ was replaced with 0.0005 mol of Al₂(SO₄)₃, and NH₄HF₂ was replaced with NH₄HCl₂.

### Example 5

Example 5 was the same as Example 1, with the exception that in "1) Preparation of positive electrode active material", the amount of FeSO₄·H₂O was adjusted to 0.69 mol, the amount of Li₂CO₃ was adjusted to 0.4965 mol, 0.001 mol of Mo(SO₄)₃ was replaced with 0.0005 mol of Nb₂(SO₄)₅, H₄SiO₄ was replaced with H₂SO₄, and 0.01 mol of VCl₂ was added in the preparation of doped manganese oxalate.

### Example 6

Example 6 was the same as Example 1, with the exception that in "1) Preparation of positive electrode active material", the amount of FeSO₄·H₂O was adjusted to 0.68 mol, the amount of Li₂CO₃ was adjusted to 0.4965 mol, 0.001 mol of Mo(SO₄)₃ was replaced with 0.0005 mol of Nb₂(SO₄)₅, H₄SiO₄ was replaced with H₂SO₄, and 0.01 mol of VCl₂ and 0.01 mol of MgSO₄ were added in the preparation of doped manganese oxalate.

### Example 7

Example 7 was the same as Example 6, with the exception that in "1) Preparation of positive electrode active material", MgSO₄ was replaced with CoSO₄.

### Example 8

Example 8 was the same as Example 6, with the exception that in "1) Preparation of positive electrode active material", MgSO₄ was replaced with NiSO₄.

### Example 9

Example 9 was the same as Example 1, with the exception that in "1) Preparation of positive electrode active material", the amount of FeSO₄·H₂O was adjusted to 0.698 mol, the amount of Li₂CO₃ was adjusted to 0.4955 mol, and 0.001 mol of Mo(SO₄)₃ was replaced with 0.0005 mol of Nb₂(SO₄)₅, H₄SiO₄ was replaced with H₂SO₄, NH₄HF₂ was replaced with NH₄HCl₂, and 0.002 mol of Ti(SO₄)₂ was added in the preparation of doped manganese oxalate.

### Example 10

Example 10 was the same as Example 1, with the exception that in "1) Preparation of positive electrode active material", the amount of FeSO₄·H₂O was adjusted to 0.68 mol, the amount of Li₂CO₃ was adjusted to 0.4975 mol, 0.001 mol of Mo(SO₄)₃ was replaced with 0.0005 mol of Nb₂(SO₄)₅, NH₄HF₂ was replaced with NH₄HBr₂, and 0.01 mol of VCl₂ and 0.01 mol of MgSO₄ were added in the preparation of doped manganese oxalate.

### Example 11

Example 11 was the same as Example 1, with the exception that in "1) Preparation of positive electrode active material", the amount of FeSO₄·H₂O was adjusted to 0.69 mol, the amount of Li₂CO₃ was adjusted to 0.499 mol, Mo(SO₄)₃ was replaced with MgSO₄, NH₄HF₂ was replaced with NH₄HBr₂, and 0.01 mol of VCl₂ was added in the preparation of doped manganese oxalate.

### Example 12

Example 12 was the same as Example 1, with the exception that in "1) Preparation of positive electrode active material", the amount of MnSO₄·H₂O was adjusted to 1.36 mol, the amount of FeSO₄·H₂O was adjusted to 0.6 mol, the amount of Li₂CO₃ was adjusted to 0.4985 mol, Mo(SO₄)₃ was replaced with MgSO₄, H₄SiO₄ was replaced with HNO₃, and 0.04 mol of VCl₂ was added in the preparation of doped manganese oxalate.

### Example 13

Example 13 was the same as Example 12, with the exception that in "1) Preparation of positive electrode active material", the amount of MnSO₄·H₂O was adjusted to 1.16 mol, and the amount of FeSO₄·H₂O was adjusted to 0.8 mol.

### Example 14

Example 14 was the same as Example 12, with the exception that in "1) Preparation of positive electrode active material", the amount of MnSO₄·H₂O was adjusted to 1.3 mol, and the amount of VCl₂ was adjusted to 0.1 mol.

### Example 15

Example 15 was the same as Example 1, with the exception that in "1) Preparation of positive electrode active material", the amount of MnSO₄·H₂O was adjusted to 1.2 mol, the amount of Li₂CO₃ was adjusted to 0.494 mol, 0.001 mol of Mo(SO₄)₃ was replaced with 0.005 mol of MgSO₄, H₄SiO₄ was replaced with H₂SO₄, and 0.1 mol of VCl₂ was added in the preparation of doped manganese oxalate.

### Example 16

Example 16 was the same as Example 1, with the exception that in "1) Preparation of positive electrode active material", the amount of MnSO₄·H₂O was adjusted to 1.2 mol, the amount of Li₂CO₃ was adjusted to 0.467 mol, and 0.001 mol of Mo(SO₄)₃ was replaced with 0.005 mol of MgSO₄, 0.001 mol of H₄SiO₄ was replaced with 0.005 mol of H₂SO₄, 1.175 mol of phosphoric acid with a concentration of 85% was replaced with 1.171 mol of phosphoric acid with a concentration of 85%, and 0.1 mol of VCl₂ was added in the preparation of doped manganese oxalate.

### Example 17

Example 17 was the same as Example 1, with the exception that in "1) Preparation of positive electrode active material", the amount of MnSO₄·H₂O was adjusted to 1.2 mol, the amount of Li₂CO₃ was adjusted to 0.492 mol, 0.001 mol of Mo(SO₄)₃ was replaced with 0.005 mol of MgSO₄, H₄SiO₄ was replaced with H₂SO₄, the amount of NH₄HF₂ was adjusted to 0.0025 mol, and 0.1 mol of VCl₂ was added in the of preparation of doped manganese oxalate.

### Example 18

Example 18 was the same as Example 1, with the exception that in "1) Preparation of positive electrode active material", the amount of FeSO₄·H₂O was adjusted to 0.5 mol, the amount of Li₂CO₃ was adjusted to 0.492 mol, 0.001 mol of Mo(SO₄)₃ was replaced with 0.005 mol of MgSO₄, H₄SiO₄ was replaced with H₂SO₄, the amount of NH₄HF₂ was adjusted to 0.0025 mol, and 0.1 mol of VCl₂ and 0.1 mol of CoSO₄ were added in the preparation of doped manganese oxalate.

### Example 19

Example 19 was the same as Example 18, with the exception that in "1) Preparation of positive electrode active material", the amount of FeSO₄·H₂O was adjusted to 0.4 mol, and the amount of CoSO₄ was adjusted to 0.2 mol.

### Example 20

Example 20 was the same as Example 18, with the exception that in "1) Preparation of positive electrode active material", the amount of MnSO₄·H₂O was adjusted to 1.5 mol, the amount of FeSO₄·H₂O was adjusted to 0.1 mol, and the amount of CoSO₄ was adjusted to 0.3 mol.

### Example 21

Example 21 was the same as Example 18, with the exception that in "1) Preparation of positive electrode active material", 0.1 mol of CoSO₄ was replaced with 0.1 mol of NiSO₄.

### Example 22

Example 22 was the same as Example 18, with the exception that in "1) Preparation of positive electrode active material", the amount of MnSO₄·H₂O was adjusted to 1.5 mol, the amount of FeSO₄·H₂O was adjusted to 0.2 mol, and 0.1 mol of CoSO₄ was replaced with 0.2 mol of NiSO₄.

### Example 23

Example 23 was the same as Example 18, with the exception that in "1) Preparation of positive electrode active material", the amount of MnSO₄·H₂O was adjusted to 1.4 mol, the amount of FeSO₄·H₂O was adjusted to 0.3 mol, and the amount of CoSO₄ was adjusted to 0.2 mol.

### Example 24

Example 24 was the same as Example 1, with the exception that in "1) Preparation of positive electrode active material", the amount of MnSO₄·H₂O was adjusted to 1.2 mol, the amount of FeSO₄·H₂O was adjusted to 0.5 mol, the amount of Li₂CO₃ was adjusted to 0.497 mol, 0.001 mol of Mo(SO₄)₃ was replaced with 0.005 mol of MgSO₄, H₄SiO₄ was replaced with H₂SO₄, the amount of NH₄HF₂ was adjusted to 0.0025 mol, and 0.1 mol of VCl₂ and 0.2mol of CoSO₄ were added in the preparation of doped manganese oxalate.

### Example 25

Example 25 was the same as Example 18, with the exception that in "1) Preparation of positive electrode active material", the amount of MnSO₄·H₂O was adjusted to 1.0 mol, the amount of FeSO₄·H₂O was adjusted to 0.7 mol, and the amount of CoSO₄ was adjusted to 0.2 mol.

### Example 26

Example 26 was the same as Example 1, with the exception that in "1) Preparation of positive electrode active material", the amount of MnSO₄·H₂O was adjusted to 1.4 mol, the amount of FeSO₄·H₂O was adjusted to 0.3 mol, the amount of Li₂CO₃ was adjusted to 0.4825 mol, 0.001 mol of Mo(SO₄)₃ was replaced with 0.005 mol of MgSO₄, the amount of H₄SiO₄ was adjusted to 0.1 mol, the amount of phosphoric acid was adjusted to 0.9 mol, the amount of NH₄HF₂ was adjusted to 0.04 mol, and 0.1 mol of VCl₂ and 0.2 mol of CoSO₄ were added in the preparation of doped manganese oxalate.

### Example 27

Example 27 was the same as Example 1, with the exception that in "1) Preparation of positive electrode active material", the amount of MnSO₄·H₂O was adjusted to 1.4 mol, the amount of FeSO₄·H₂O was adjusted to 0.3 mol, the amount of Li₂CO₃ was adjusted to 0.485 mol, and 0.001 mol of Mo(SO₄)₃ was replaced with 0.005 mol of MgSO₄, the amount of H₄SiO₄ was adjusted to 0.08 mol, the amount of phosphoric acid was adjusted to 0.92 mol, the amount of NH₄HF₂ was adjusted to 0.05 mol, and 0.1 mol of VCl₂ and 0.2 mol of CoSO₄ were added in the preparation of doped manganese oxalate.

### Examples 28-52

Examples 28-52 were the same as Example 1 in terms of the preparation of positive electrode active material, preparation of positive electrode plate, preparation of negative electrode plate, preparation of separator and preparation of battery, with the exception for the preparation of non-aqueous electrolytic solution. The preparation of non-aqueous electrolytic solution was shown in Table 3 for details.

Comparative Examples 1-9 were the same as Example 1 in terms of the preparation of positive electrode plate, preparation of negative electrode plate, preparation of separator and preparation of battery, with the exception for the preparation of positive electrode active material and the preparation of non-aqueous electrolytic solution. The preparation of non-aqueous electrolytic solution was shown in Table 3 for details.

### Comparative Example 1

### 1) Preparation of positive electrode active material

Preparation of manganese oxalate: 1 mol of MnSO₄·H₂O was added to a reaction kettle and 10 L of deionized water and 1 mol of oxalic acid dihydrate (as oxalic acid) were added. The reaction kettle was heated to 80°C and stirred at 600 rpm for 6 h. The reaction ended (no bubbles were generated) to obtain a suspension of manganese oxalate. Then the suspension was filtered and the resulting filter cake was dried at 120°C, after which it was ground to obtain particles of manganese oxalate with a median particle size D_{V50} of 50-200 nm.

Preparation of lithium manganese phosphate: 1 mol of the above particles of manganese oxalate, 0.5 mol of lithium carbonate, aqueous phosphoric acid solution containing 1 mol of phosphoric acid at a concentration of 85%, and 0.005 mol of sucrose were added to 20 L of deionized water. The mixture was transferred to a sanding mill and well ground and stirred for 10 hours to obtain a slurry. The slurry was transferred to a spray drying equipment for spray drying granulation, with a drying temperature of 250°C for 4 hours to obtain granules. The above powder was sintered at 700°C for 10 hours in a protective atmosphere of nitrogen (90 vol%) + hydrogen (10 vol%) to obtain LiMnPO₄ coated with carbon.

### 2) Preparation of non-aqueous electrolytic solution

In an argon atmosphere glove box (H₂O<0.1 ppm, O₂<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆ was dissolved, and the resulting mixture was stirred homogeneously, to obtain a non-aqueous electrolytic solution.

### Comparative Example 2

Comparative Example 2 was the same as Comparative Example 1, with the exception that 1 mol of MnSO₄·H₂O was replaced with 0.85 mol of MnSO₄·H₂O and 0.15 mol of FeSO₄·H₂O, and MnSO₄·H₂O and FeSO₄·H₂O were mixed thoroughly in a mixer for 6 hours and then transferred to a reaction kettle.

### Comparative Example 3

Comparative Example 3 was the same as Example 1, with the exception that in "1) Preparation of positive electrode active material", the amount of MnSO₄·H₂O was adjusted to 1.9 mol, 0.7 mol of FeSO₄·H₂O was replaced with 0.1 mol of ZnSO₄, the amount of Li₂CO₃ was adjusted to 0.495 mol, 0.001 mol of Mo(SO₄)₃ was replaced with 0.005 mol of MgSO₄, the amount of phosphoric acid was adjusted to 1 mol, neither H₄SiO₄ nor NH₄HF₂ was added, and compound H38 was not added during the preparation of the non-aqueous electrolytic solution.

### Comparative Example 4

Comparative Example 4 was the same as Example 1, with the exception that in "1) Preparation of positive electrode active material", the amount of MnSO₄·H₂O was adjusted to 1.2 mol, the amount of FeSO₄·H₂O was adjusted to 0.8 mol, the amount of Li₂CO₃ was adjusted to 0.45 mol, 0.001 mol of Mo(SO₄)₃ was replaced with 0.005 mol of Nb₂(SO₄)₅, the amount of phosphoric acid was adjusted to 1 mol,, the amount of NH₄HF₂ was adjusted to 0.025 mol, H₄SiO₄ was not added, and compound H38 was not added during the preparation of the non-aqueous electrolytic solution.

### Comparative Example 5

Comparative Example 5 was the same as Example 1, with the exception that in "1) Preparation of positive electrode active material", the amount of MnSO₄·H₂O was adjusted to 1.4 mol, the amount of FeSO₄·H₂O was adjusted to 0.6 mol, the amount of Li₂CO₃ was adjusted to 0.38 mol, and 0.001 mol of Mo(SO₄)₃ was replaced with 0.12 mol of MgSO₄, and compound H38 was not added during the preparation of the non-aqueous electrolytic solution.

### Comparative Example 6

Comparative Example 6 was the same as Example 1, with the exception that in "1) Preparation of positive electrode active material", the amount of MnSO₄·H₂O was adjusted to 0.8 mol, 0.7 mol of FeSO₄·H₂O was replaced with 1.2 mol of ZnSO₄, the amount of Li₂CO₃ was adjusted to 0.499 mol, and 0.001 mol of Mo(SO₄)₃ was replaced with 0.001 mol of MgSO₄, and compound H38 was not added during the preparation of the non-aqueous electrolytic solution.

### Comparative Example 7

Comparative Example 7 was the same as Example 1, with the exception that in "1) Preparation of positive electrode active material", the amount of MnSO₄·H₂O was adjusted to 1.4 mol, the amount of FeSO₄·H₂O was adjusted to 0.6 mol, the amount of Li₂CO₃ was adjusted to 0.534 mol, 0.001 mol of Mo(SO₄)₃ was replaced with 0.001 mol of MgSO₄, the amount of phosphoric acid was adjusted to 0.88 mol, the amount of H₄SiO₄ was adjusted to 0.12 mol, and the amount of NH₄HF₂ was adjusted to 0.025 mol, and compound H38 was not added during the preparation of the non-aqueous electrolytic solution.

### Comparative Example 8

Comparative Example 8 was the same as Example 1, with the exception that in "1) Preparation of positive electrode active material", the amount of MnSO₄·H₂O was adjusted to 1.2 mol, the amount of FeSO₄·H₂O was adjusted to 0.8 mol, the amount of Li₂CO₃ was adjusted to 0.474 mol, 0.001 mol of Mo(SO₄)₃ was replaced with 0.001 mol of MgSO₄, the amount of phosphoric acid was adjusted to 0.93 mol, the amount of H₄SiO₄ was adjusted to 0.07 mol, and the amount of NH₄HF₂ was adjusted to 0.06 mol, and compound H38 was not added during the preparation of the non-aqueous electrolytic solution.

### Comparative Example 9

Comparative Example 9 was the same as Example 1, with the exception that compound H38 was not added during the preparation of the non-aqueous electrolytic solution.

### Test methods for performance of positive electrode active materials, positive electrode plates, and batteries

### 1. Measurement method for lattice change rate

Under a constant temperature environment of 25°C, a positive electrode active material sample was placed in an X-ray diffractometer (Bruker D8 Discover model) and tested at 1°/minute. The test data was organized and analyzed. Referring to the standard PDF card, the lattice constants a0, b0, c0, and v0 (a0, b0, and c0 represent the length size in individual directions of lattice cell, respectively, v0 represents the volume of lattice cell, which can be directly obtained through XRD refinement results) were calculated.

Using the preparation method of button battery described above in the examples, the positive electrode active material sample was prepared into a button battery. The button battery was charged at a small rate of 0.05C until the current decreased to 0.01C. Then the positive electrode plate was taken out of the button battery and soaked in DMC for 8 hours. After drying and scraping the powder, the particles with a particle size less than 500 nm were screened out. A sample was taken and its lattice constant v1 was calculated in the same way as the fresh sample was tested above. (v0-v1)/v0 × 100% representing the lattice change rate of before and after complete de-intercalation and intercalation of lithium was shown in the table.

### 2. Measurement method for Li/Mn anti-site defect concentration

The XRD results measured in the "Measurement method for lattice change rate" were compared with the PDF (Powder Diffusion File) card of standard crystal to obtain the Li/Mn anti-site defect concentration. Specifically, the XRD results tested in the "Measurement method for lattice change rate" were imported into the General Structural Analysis System (GSAS) software to automatically obtain refined results, which include the occupancy of different atoms. The Li/Mn anti-site defect concentration was obtained by reading the refined results.

### 3. Measurement method for surface oxygen valence

5g of positive electrode active material sample was taken and prepared into a button battery according to the preparation method of button battery described above in the examples. The button battery was charged at a low rate of 0.05C until the current decreased to 0.01C. Then the positive electrode plate was taken out of the button battery and soaked in DMC for 8 hours. After drying and scraping the powder, the particles with a particle size less than 500 nm were obtained by sieving. The obtained particles were measured with Electron Energy Loss Spectroscopy (EELS, Talos F200S model) to obtain the energy loss near edge structure (ELNES), which can reflect the state density and energy level distribution of elements. Based on the density of states and energy level distribution, the number of occupied electrons was calculated by integrating the density of states in valence band, thereby calculating the surface oxygen valence after charging.

### 4. Measurement method for compaction density

5g of positive electrode active material sample powders were taken and placed in a special mold for compaction (CARVER mold in the United States, model 13mm), and then the mold was placed on a compaction density instrument. 3T (tonne) of pressure was applied and the thickness of the powders under pressure was read on the equipment (the thickness after pressure relief, the area of the container used for testing being 1540.25mm²). The compaction density was calculated via ρ= m/v.

### 5. Measurement method for leaching out of Mn (and Fe doped at Mn site) after cycling

A full battery that had been circled at 45 °C until its capacity was reduced to 80% was discharged at a rate of 0.1 C to the cutoff voltage of 2.0 V. Then the battery was disassembled, and the negative electrode plate was taken out. 30 discs of unit areas (1540.25mm²) were randomly taken on the negative electrode plate. Inductively coupled plasma emission spectrum (ICP) was tested by using Agilent ICP-OES730. The amounts of Fe (if Fe was doped at Mn site of the positive electrode active material) and Mn were calculated on the basis of the ICP results, and then the amount of leaching out of Mn (and Fe doped at Mn site) after cycling was calculated. The testing standard was based on EPA-6010D-2014.

### 6. Measurement method for initial specific capacity of button battery

At a constant temperature of 25°C, a button battery was charged to 4.3V at 0.1C, then charged at a constant voltage of 4.3V until the current was less than or equal to 0.05 mA, then rested for 5 minutes. Then the button battery was discharged at 0.1C to 2.0V. The discharge capacity measured at this moment was initial specific capacity, denoted as D0.

### 7. Measurement method for 3C charging constant current ratio

Under a constant temperature environment of 25°C, a fresh full battery rested for 5 minutes and was discharged at a rate of 1/3C to 2.5V, and rested for 5 minutes and was charged at 1/3C to 4.3V, and then charged at a constant voltage at 4.3V until the current was less than or equal to 0.05 mA. The full battery rested for 5 minutes, then the charging capacity at this moment was reported as C0. The full battery was discharged at 1/3C to 2.5V, rested for 5 minutes, then was charged at 3C to 4.3V, rested for 5 minutes. The charging capacity at this moment was reported as C1. The 3C charging constant current ratio was C1/C0 × 100%.

The higher the 3C charging constant current ratio, the better the rate performance of the battery.

### 8. Test of cycle performance at 45 °C of full battery

Under a constant temperature environment of 45°C, a full battery was charged at 1C to 4.3V, and then charged at a constant voltage at 4.3V until the current was less than or equal to 0.05 mA. The full battery rested for 5 minutes, then discharged at 1C to 2.5V. The discharging capacity at this moment was reported as E0. The above charging-discharging cycle was repeated until the discharging capacity was reduced to 80% of E0. The number of cycles the battery had undergone at this moment was reported.

### 9. Test of gas expansion at 60°C of full battery

A full battery stored 100% state of charge (SOC) at 60°C. Before, during and after storage, the open circuit voltage (OCV) and AC internal impedance (IMP) of the battery were tested to monitor SOC and the volume of the battery was measured. After every 48 hours of storage, the full battery was taken out and rested for 1 hour, and then the open circuit voltage (OCV) and internal impedance (IMP) were tested. After cooling to room temperature, the volume of the battery was measured using the drainage method. The drainage method included measuring the gravity F₁ of the battery separately with a balance that can automatically perform unit conversion with the dial data, and then placing the battery completely in deionized water (with the density of 1g/cm³), measuring the gravity F₂ of the battery at this moment wherein the buoyant force F_{b} of the battery was F₁-F₂, and then according to the Archimedes principle F_{b} = ρ× g × V_{Drainage}, the volume of battery was calculated: V=( F₁-F₂)/(ρ×g).

From the OCV and IMP test results, it can be seen that the batteries according to the examples maintain a SOC of 99% or higher throughout the testing process until the end of storage.

After 30 days of storage, the volume of battery was measured, and the percentage increase in battery volume after storage compared to the previous battery volume was calculated.

### 10. Determination of the chemical formula of the positive electrode active material

The internal microstructure and surface structure of the positive electrode active material were characterized with high spatial resolution by the spherical Aberration Corrected Scanning Transmission Electron Microscope (ACSTEM). By combining with the three-dimensional reconstruction technology, the chemical formula of the positive electrode active material were obtained.

Table 1 shows the composition of the positive electrode active material in Examples 1-11 and Comparative Examples 1-9.

Table 2 shows the composition of the positive electrode active material in Examples 12-27.

Table 3 shows the method for preparing the non-aqueous electrolytic solution in Examples 1-52 and Comparative Examples 1-9.

**Table 1**

| No. | positive electrode active material |
|---|---|
| Comparative Example 1 | LiMnPO₄ |
| Comparative Example 2 | LiMn_{0.85}Fe_{0.15}PO₄ |
| Comparative Example 3 | Li_{0.990}Mg_{0.005}Mn_{0.95}Zn_{0.05}PO₄ |
| Comparative Example 4 | Li_{0.90}Nb_{0.01}Mn_{0.6}Fe_{0.4}PO_{3.95}F_{0.05} |
| Comparative Example 5 | Li_{0.76}Mg_{0.12}Mn_{0.7}Fe_{0.3}P_{0.999}Si_{0.001}O_{3.999}F_{0.001} |
| Comparative Example 6 | Li_{0.998}Mg_{0.001}Mn_{0.4}Zn_{0.6}P_{0.999}Si_{0.001}O_{3.999}F_{0.001} |
| Comparative Example 7 | Li_{1.068}Mg_{0.001}Mn_{0.7}Fe_{0.3}P_{0.88}Si_{0.12}O_{3.95}F_{0.05} |
| Comparative Example 8 | Li_{0.948}Mg_{0.001}Mn_{0.6}Fe_{0.4}P_{0.93}Si_{0.07}O_{3.88}F_{0.12} |
| Comparative Example 9 | Li_{0.994}Mo_{0.001}Mn_{0.65}Fe_{0.35}P_{0.999}Si_{0.001}O_{3.999}F_{0.001} |
| Example 1 | Li_{0.994}Mo_{0.001}Mn_{0.65}Fe_{0.35}P_{0.999}Si_{0.001}O_{3.999}F_{0.001} |
| Example 2 | Li_{0.977}Mg_{0.001}Mn_{0.65}Fe_{0.34}Ti_{0.01}P_{0.999}N_{0.001}O_{3.999}F_{0.001} |
| Example 3 | Li_{0.992}W_{0.001}Mn_{0.65}Fe_{0.35}P_{0.999}S_{0.001}O_{3.999}F_{0.001} |
| Example 4 | Li_{0.997}Al_{0.001}Mn_{0.65}Fe_{0.35}P_{0.999}Si_{0.001}O_{3.999}Cl_{0.001} |
| Example 5 | Li_{0.993}Nb_{0.001}Mn_{0.65}Fe_{0.345}V_{0.005}P_{0.999}S_{0.001}O_{3.999}F_{0.001} |
| Example 6 | Li_{0.993}Nb_{0.001}Mn_{0.65}Fe_{0.34}V_{0.005}Mg_{0.005}P_{0.999}S_{0.001}O_{3.999}F_{0.001} |
| Example 7 | Li_{0.993}Nb_{0.001}Mn_{0.65}Fe_{0.34}V_{0.005}Co_{0.005}P_{0.999}S_{0.001}O_{3.999}F_{0.001} |
| Example 8 | Li_{0.993}Nb_{0.001}Mn_{0.65}Fe_{0.34}V_{0.005}Ni_{0.005}P_{0.999}S_{0.001}O_{3.999}F_{0.001} |
| Example 9 | Li_{0.991}Nb_{0.001}Mn_{0.65}Fe_{0.349}Ti_{0.001}P_{0.999}S_{0.001}O_{3.999}Cl_{0.001} |
| Example 10 | Li_{0.995}Nb_{0.001}Mn_{0.65}Fe_{0.34}V_{0.005}Mg_{0.005}P_{0.999}Si_{0.001}O_{3.999}Br_{0.001} |
| Example 11 | Li_{0.998}Mg_{0.001}Mn_{0.65}Fe_{0.345}V_{0.005}P_{0.999}Si_{0.001}O_{3.999}Br_{0.001} |

**Table 2**

| No. | positive electrode active material | (1-y):y | m:x |
|---|---|---|---|
| Example 12 | Li_{0.997}Mg_{0.001}Mn_{0.68}Fe_{0.3}V_{0.02}P_{0.999}N_{0.001}O_{3.999}F_{0.001} | 2.13 | 997 |
| Example 13 | Li_{0.997}Mg_{0.001}Mn_{0.58}Fe_{0.4}V_{0.02}P_{0.999}N_{0.001}O_{3.999}F_{0.001} | 1.38 | 997 |
| Example 14 | Li_{0.997}Mg_{0.001}Mn_{0.65}Fe_{0.3}V_{0.05}P_{0.999}N_{0.001}O_{3.999}F_{0.001} | 1.86 | 997 |
| Example 15 | Li_{0.988}Mg_{0.005}Mn_{0.6}Fe_{0.35}V_{0.05}P_{0.999}S_{0.001}O_{3.999}F_{0.001} | 1.50 | 197.6 |
| Example 16 | Li_{0.984}Mg_{0.005}Mn_{0.6}Fe_{0.35}V_{0.05}P_{0.995}S_{0.005}O_{3.999}F_{0.001} | 1.50 | 196.8 |
| Example 17 | Li_{0.984}Mg_{0.005}Mn_{0.6}Fe_{0.35}V_{0.05}P_{0.999}S_{0.001}O_{3.995}F_{0.005} | 1.50 | 196.8 |
| Example 18 | Li_{0.984}Mg_{0.005}Mn_{0.65}Fe_{0.25}V_{0.05}Co_{0.05}P_{0.999}S_{0.001}O_{3.995}F_{0.005} | 1.86 | 196.8 |
| Example 19 | Li_{0.984}Mg_{0.005}Mn_{0.65}Fe_{0.20}V_{0.05}Co_{0.10}P_{0.999}S_{0.001}O_{3.995}F_{0.005} | 1.86 | 196.8 |
| Example 20 | Li_{0.984}Mg_{0.005}Mn_{0.75}Fe_{0.05}V_{0.05}Co_{0.15}P_{0.999}S_{0.001}O_{3.995}F_{0.005} | 3.00 | 196.8 |
| Example 21 | Li_{0.984}Mg_{0.005}Mn_{0.65}Fe_{0.25}V_{0.05}Ni_{0.05}P_{0.999}S_{0.001}O_{3.995}F_{0.005} | 1.86 | 196.8 |
| Example 22 | Li_{0.984}Mg_{0.005}Mn_{0.75}Fe_{0.10}V_{0.05}Ni_{0.10}P_{0.999}S_{0.001}O_{3.995}F_{0.005} | 3.00 | 196.8 |
| Example 23 | Li_{0.984}Mg_{0.005}Mn_{0.7}Fe_{0.15}V_{0.05}Co_{0.10}P_{0.999}S_{0.001}O_{3.995}F_{0.005} | 2.33 | 196.8 |
| Example 24 | Li_{0.984}Mg_{0.005}Mn_{0.6}Fe_{0.25}V_{0.05}Co_{0.10}P_{0.999}S_{0.001}O_{3.995}F_{0.005} | 1.50 | 196.8 |
| Example 25 | Li_{0.984}Mg_{0.005}Mn_{0.5}Fe_{0.35}V_{0.05}Co_{0.10}P_{0.999}S_{0.001}O_{3.995}F_{0.005} | 1.00 | 196.8 |
| Example 26 | Li_{1.01}Mg_{0.005}Mn_{0.7}Fe_{0.15}V_{0.05}Co_{0.10}P_{0.9}Si_{0.1}O_{3.92}F_{0.08} | 2.33 | 202 |
| Example 27 | Li_{0.97}Mg_{0.005}Mn_{0.7}Fe_{0.15}V_{0.05}Co_{0.10}P_{0.92}Si_{0.08}O_{3.9}F_{0.1} | 2.33 | 194 |

**Table 3**

| No. | Preparation of non-aqueous electrolytic solution |
|---|---|
| Comparative Example 1-9 | In an argon atmosphere glove box (H₂O<0.1 ppm, O₂<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆ was dissolved, and the resulting mixture was stirred homogeneously, to obtain a non-aqueous electrolytic solution. |
| Example 1-27 | In an argon atmosphere glove box (H₂O<0.1 ppm, O₂<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆ and 1 wt% (based on the total weight of the non-aqueous electrolytic solution) of compound H38 were dissolved, and the resulting mixture was stirred homogeneously, to obtain a non-aqueous electrolytic solution. |
| Example 28 | In an argon atmosphere glove box (H₂O<0.1 ppm, O₂<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆ and 1 wt% (based on the total weight of the non-aqueous electrolytic solution) of compound H2 were dissolved, and the resulting mixture was stirred homogeneously, to obtain a non-aqueous electrolytic solution. |
| Example 29 | In an argon atmosphere glove box (H₂O<0.1 ppm, Oz<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆ and 1 wt% (based on the total weight of the non-aqueous electrolytic solution) of compound H3 were dissolved, and the resulting mixture was stirred homogeneously, to obtain a non-aqueous electrolytic solution. |
| Example 30 | In an argon atmosphere glove box (H₂O<0.1 ppm, Oz<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆ and 1 wt% (based on the total weight of the non-aqueous electrolytic solution) of compound H12 were dissolved, and the resulting mixture was stirred homogeneously, to obtain a non-aqueous electrolytic solution. |
| Example 31 | In an argon atmosphere glove box (H₂O<0.1 ppm, Oz<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆ and 1 wt% (based on the total weight of the non-aqueous electrolytic solution) of compound H19 were dissolved, and the resulting mixture was stirred homogeneously, to obtain a non-aqueous electrolytic solution. |
| Example 32 | In an argon atmosphere glove box (H₂O<0.1 ppm, O₂<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆ and 1 wt% (based on the total weight of the non-aqueous electrolytic solution) of compound H20 were dissolved, and the resulting mixture was stirred homogeneously, to obtain a non-aqueous electrolytic solution. |
| Example 33 | In an argon atmosphere glove box (H₂O<0.1 ppm, Oz<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆ and 1 wt% (based on the total weight of the non-aqueous electrolytic solution) of compound H24 were dissolved, and the resulting mixture was stirred homogeneously, to obtain a non-aqueous electrolytic solution. |
| Example 34 | In an argon atmosphere glove box (H₂O<0.1 ppm, Oz<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆ and 1 wt% (based on the total weight of the non-aqueous electrolytic solution) of compound H28 were dissolved, and the resulting mixture was stirred homogeneously, to obtain a non-aqueous electrolytic solution. |
| Example 35 | In an argon atmosphere glove box (H₂O<0.1 ppm, Oz<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆ and 1 wt% (based on the total weight of the non-aqueous electrolytic solution) of compound H35 were dissolved, and the resulting mixture was stirred homogeneously, to obtain a non-aqueous electrolytic solution. |
| Example 36 | In an argon atmosphere glove box (H₂O<0.1 ppm, Oz<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆ and 1 wt% (based on the total weight of the non-aqueous electrolytic solution) of compound H36 were dissolved, and the resulting mixture was stirred homogeneously, to obtain a non-aqueous electrolytic solution. |
| Example 37 | In an argon atmosphere glove box (H₂O<0.1 ppm, Oz<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆ and 1 wt% (based on the total weight of the non-aqueous electrolytic solution) of compound H37 were dissolved, and the resulting mixture was stirred homogeneously, to obtain a non-aqueous electrolytic solution. |
| Example 38 | In an argon atmosphere glove box (H₂O<0.1 ppm, Oz<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆, 1 wt% (based on the total weight of the non-aqueous electrolytic solution) of compound H38 and 1 wt% (based on the total weight of the non-aqueous electrolytic solution) of DTD were dissolved, and the resulting mixture was stirred homogeneously, to obtain a non-aqueous electrolytic solution. |
| Example 39 | In an argon atmosphere glove box (H₂O<0.1 ppm, Oz<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆, 1 wt% (based on the total weight of the non-aqueous electrolytic solution) of compound H38 and 1 wt% (based on the total weight of the non-aqueous electrolytic solution) of lithium difluorophosphate were dissolved, and the resulting mixture was stirred homogeneously, to obtain a non-aqueous electrolytic solution. |
| Example 40 | In an argon atmosphere glove box (H₂O<0.1 ppm, Oz<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆, 1 wt% (based on the total weight of the non-aqueous electrolytic solution) of compound H38 and 1 wt% (based on the total weight of the non-aqueous electrolytic solution) of lithium difluorodioxalate phosphate were dissolved, and the resulting mixture was stirred homogeneously, to obtain a non-aqueous electrolytic solution. |
| Example 41 | In an argon atmosphere glove box (H₂O<0.1 ppm, Oz<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆, 1 |
| | wt% (based on the total weight of the non-aqueous electrolytic solution) of compound H38 and 1 wt% (based on the total weight of the non-aqueous electrolytic solution) of lithium fluorosulfonate were dissolved, and the resulting mixture was stirred homogeneously, to obtain a non-aqueous electrolytic solution. |
| Example 42 | In an argon atmosphere glove box (H₂O<0.1 ppm, Oz<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆, 1 wt% (based on the total weight of the non-aqueous electrolytic solution) of compound H38 and 1 wt% (based on the total weight of the non-aqueous electrolytic solution) of lithium trifluoromethanesulfonate were dissolved, and the resulting mixture was stirred homogeneously, to obtain a non-aqueous electrolytic solution. |
| Example 43 | In an argon atmosphere glove box (H₂O<0.1 ppm, Oz<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆, 1 wt% (based on the total weight of the non-aqueous electrolytic solution) of compound H38, 1 wt% (based on the total weight of the non-aqueous electrolytic solution) of DTD and 1 wt% (based on the total weight of the non-aqueous electrolytic solution) of VC were dissolved, and the resulting mixture was stirred homogeneously, to obtain a non-aqueous electrolytic solution. |
| Example 44 | In an argon atmosphere glove box (H₂O<0.1 ppm, Oz<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆, 1 wt% (based on the total weight of the non-aqueous electrolytic solution) of compound H38, 1 wt% (based on the total weight of the non-aqueous electrolytic solution) of DTD and 1 wt% (based on the total weight of the non-aqueous electrolytic solution) of VEC were dissolved, and the resulting mixture was stirred homogeneously, to obtain a non-aqueous electrolytic solution. |
| Example 45 | In an argon atmosphere glove box (H₂O<0.1 ppm, Oz<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆, 1 wt% (based on the total weight of the non-aqueous electrolytic solution) of compound H38, 1 wt% (based on the total weight of the non-aqueous electrolytic solution) of DTD and 1 wt% (based on the total weight of the non-aqueous electrolytic solution) of FEC were dissolved, and the resulting mixture was stirred homogeneously, to obtain a non-aqueous electrolytic solution. |
| Example 46 | In an argon atmosphere glove box (H₂O<0.1 ppm, Oz<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆ and 0.01 wt% (based on the total weight of the non-aqueous electrolytic solution) of compound H38 were dissolved, and the resulting mixture was stirred homogeneously, to obtain a non-aqueous electrolytic solution. |
| Example 47 | In an argon atmosphere glove box (H₂O<0.1 ppm, Oz<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆ and 0.1 wt% (based on the total weight of the non-aqueous electrolytic solution) of compound H38 were dissolved, and the resulting mixture was stirred homogeneously, to obtain a non-aqueous electrolytic solution. |
| Example 48 | In an argon atmosphere glove box (H₂O<0.1 ppm, Oz<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆ and 0.3 wt% (based on the total weight of the non-aqueous electrolytic solution) of compound H38 were dissolved, and the resulting mixture was stirred homogeneously, to obtain a non-aqueous electrolytic solution. |
| Example 49 | In an argon atmosphere glove box (H₂O<0.1 ppm, Oz<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆ and 5 wt% (based on the total weight of the non-aqueous electrolytic solution) of compound H38 were dissolved, and the resulting mixture was stirred homogeneously, to obtain a non-aqueous electrolytic solution. |
| Example 50 | In an argon atmosphere glove box (H₂O<0.1 ppm, Oz<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆ and 8 wt% (based on the total weight of the non-aqueous electrolytic solution) of compound H38 were dissolved, and the resulting mixture was stirred homogeneously, to obtain a non-aqueous electrolytic solution. |
| Example 51 | In an argon atmosphere glove box (H₂O<0.1 ppm, Oz<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆ and 10 wt% (based on the total weight of the non-aqueous electrolytic solution) of compound H38 were dissolved, and the resulting mixture was stirred homogeneously, to obtain a non-aqueous electrolytic solution. |
| Example 52 | In an argon atmosphere glove box (H₂O<0.1 ppm, Oz<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆ and 20 wt% (based on the total weight of the non-aqueous electrolytic solution) of compound H38 were dissolved, and the resulting mixture was stirred homogeneously, to obtain a non-aqueous electrolytic solution. |

Table 4 shown the performance data of the positive electrode active materials, positive electrode plates, button battery or full battery of Examples 1-11 and Comparative Examples 1-9 measured in accordance with the performance test methods described above.

Table 5 shown the performance data of the positive electrode active materials, positive electrode plates, button battery or full battery of Examples 12-27 measured in accordance with the performance test methods described above.

**Table 4**

| No. | Lattice change rate (%) | Li/Mn anti-site defect concentration (%) | surface oxygen valence | Compaction density (g/cm³) | leaching out of Fe and Mn (ppm) after cycling | Initial specific capacity of button battery mAh/g | 3C charge constant current ratio (mAh/g) | Cycle number corresponding to 80% capacity retention at 45°C | Battery expansion after storage at 60°C(%) |
|---|---|---|---|---|---|---|---|---|---|
| Comparative Example 1 | 11.4 | 5.2 | -1.55 | 1.7 | 2060 | 125.6 | 50.1 | 121 | 48.6 |
| Comparative Example 2 | 10.6 | 4.3 | -1.51 | 1.87 | 1510 | 126.4 | 50.4 | 129 | 37.3 |
| Comparative Example 3 | 10.8 | 3.6 | -1.64 | 1.88 | 1028 | 134.7 | 51.7 | 134 | 31.9 |
| Comparative Example 4 | 9.7 | 2.4 | -1.71 | 1.93 | 980 | 141.3 | 62.3 | 148 | 30.8 |
| Comparative Example 5 | 5.6 | 1.8 | -1.81 | 1.98 | 873 | 110.8 | 50.2 | 387 | 21.4 |
| Comparative Example 6 | 3.7 | 1.5 | -1.8 | 2.01 | 574 | 74.3 | 65.8 | 469 | 15.8 |
| Comparative Example 7 | 7.8 | 1.5 | -1.75 | 2.05 | 447 | 139.4 | 64.3 | 396 | 18.3 |
| Comparative Example 8 | 8.4 | 1.4 | -1.79 | 2.16 | 263 | 141.7 | 63.9 | 407 | 22.7 |
| Comparative Example 9 | 6.3 | 1.2 | -1.82 | 2.21 | 192 | 156.2 | 68.1 | 552 | 8.4 |
| Example 1 | 6.3 | 1.2 | -1.82 | 2.21 | 38 | 157.8 | 69.5 | 1104 | 4.2 |
| Example 2 | 6.8 | 1.1 | -1.85 | 2.25 | 32 | 154.9 | 76.6 | 1166 | 3.8 |
| Example 3 | 6.4 | 0.9 | -1.86 | 2.31 | 29 | 156.1 | 78.2 | 1292 | 4.3 |
| Example 4 | 5.5 | 0.9 | -1.89 | 2.38 | 25 | 155.1 | 80.0 | 1276 | 4.2 |
| Example 5 | 5.3 | 0.7 | -1.98 | 2.45 | 20 | 155.3 | 86.2 | 1538 | 3.9 |
| Example 6 | 2.4 | 0.7 | -1.95 | 2.47 | 18 | 159.1 | 94.4 | 1494 | 3.2 |
| Example 7 | 2.2 | 0.6 | -1.96 | 2.49 | 17 | 160.1 | 96.7 | 1716 | 3.2 |
| Example 8 | 3.4 | 0.5 | -1.98 | 2.51 | 16 | 159.2 | 95.7 | 1452 | 3.1 |
| Example 9 | 3.8 | 0.5 | -1.96 | 2.45 | 17 | 148.3 | 92.1 | 1372 | 3.4 |
| Example 10 | 4 | 0.6 | -1.97 | 2.46 | 21 | 157.3 | 93.0 | 1276 | 3.3 |
| Example 11 | 3.6 | 0.7 | -1.95 | 2.46 | 22 | 157.4 | 94.5 | 1174 | 3.2 |

**Table 5**

| No. | Lattice change rate (%) | Li/Mn anti-site defect concentration (%) | surface oxygen valence | Compaction density (g/cm³) | leaching out of Fe and Mn (ppm) after cycling | Initial specific capacity of button battery mAh/g | 3C charge constant current ratio (mAh/g) | Cycle number corresponding to 80% capacity retention at 45°C | Battery expansion after storage at 60°C(%) |
|---|---|---|---|---|---|---|---|---|---|
| Example 12 | 7.4 | 0.5 | -1.96 | 2.45 | 18.4 | 154.8 | 98.2 | 1896 | 3.4 |
| Example 13 | 7.6 | 0.4 | -1.98 | 2.48 | 16.6 | 158.7 | 86.8 | 1906 | 3.9 |
| Example 14 | 7.8 | 0.6 | -1.95 | 2.47 | 17.4 | 157.0 | 86.9 | 2134 | 3.5 |
| Example 15 | 6.4 | 0.5 | -1.97 | 2.49 | 17.2 | 158.0 | 83.7 | 1876 | 3.8 |
| Example 16 | 5.4 | 0.7 | -1.94 | 2.44 | 17.2 | 157.7 | 89.0 | 1854 | 4.2 |
| Example 17 | 4.2 | 0.6 | -1.98 | 2.42 | 17.6 | 158.1 | 93.9 | 1838 | 3.8 |
| Example 18 | 2.5 | 0.4 | -1.96 | 2.46 | 16.8 | 159.0 | 95.9 | 2114 | 3.2 |
| Example 19 | 2.4 | 0.4 | -1.97 | 2.47 | 16.8 | 158.4 | 96.3 | 2128 | 3.4 |
| Example 20 | 2.6 | 0.4 | -1.95 | 2.45 | 17.2 | 156.3 | 95.6 | 1950 | 3.7 |
| Example 21 | 3.3 | 0.5 | -1.93 | 2.46 | 16.4 | 157.3 | 93.3 | 1978 | 3.2 |
| Example 22 | 3.1 | 0.5 | -1.95 | 2.46 | 15 | 158.9 | 93.4 | 1928 | 3.2 |
| Example 23 | 2.8 | 0.6 | -1.96 | 2.44 | 13.4 | 153.3 | 86.1 | 1728 | 3.0 |
| Example 24 | 2.5 | 0.5 | -1.97 | 2.45 | 13 | 153.8 | 92.0 | 1952 | 2.8 |
| Example 25 | 2.2 | 0.4 | -1.98 | 2.46 | 11.6 | 154.8 | 94.0 | 1972 | 2.6 |
| Example 26 | 3.4 | 0.6 | -1.95 | 2.25 | 9 | 148.8 | 94.4 | 1956 | 4.7 |
| Example 27 | 2.7 | 0.5 | -1.98 | 2.28 | 8.4 | 147.3 | 93.6 | 1874 | 5.3 |

As can be seen from Table 4 and Table 5, the positive electrode active materials of the examples of the present application have achieved better performance than those of the comparative examples, in one or all aspects of cycling performance, high-temperature stability, specific capacity, and compaction density. By doping all of the Li, Mn, P, and O sites of LiMnPO₄ with the specific elements in the specific amounts, the rate performance can be improved with reduction in the leaching out of Mn and Fe, resulting in improved cycling performance and/or high-temperature stability. The specific capacity and compaction density of the positive electrode active material can also be increased. The presence of a first additive in a non-aqueous electrolytic solution is beneficial to reducing the generation of HF, lowering the acidity of the non-aqueous electrolytic solution, and thereby reducing the leaching out of manganese ions and the generation of gases; at the same time, the first additive is also capable of generating a homogeneous and dense interfacial film on the surface of the negative electrode active material, reducing the reduction reaction of the leached manganese ions at the negative electrode. As a result, when the non-aqueous electrolytic solution contains the first additive, the cycling performance and storage performance of the battery can be further improved.

From the comparison between Examples 18-20 and 23-25, it can be seen that with the same other elements, (1-y):y in the range of 1 to 4 can further improve the energy density and cycling performance of the secondary battery.

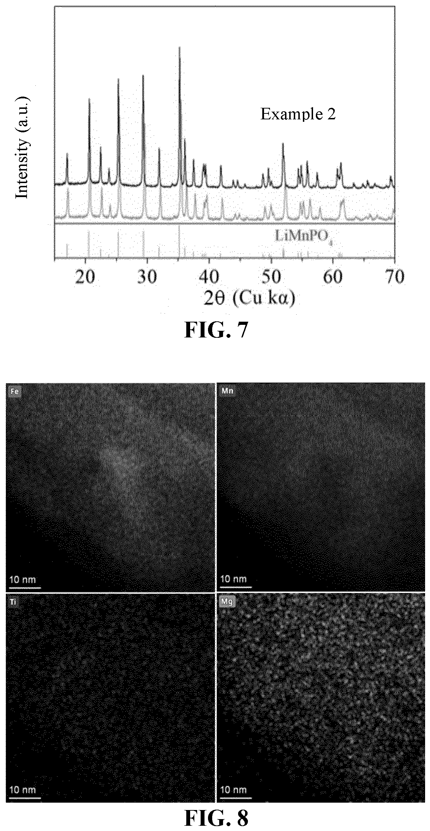

Fig. 7 shown the X-ray diffraction pattern (XRD) of the undoped LiMnPO₄ and the core of the positive electrode active material prepared in Example 2. It can be seen from Fig. 7 that the main characteristic peak positions in the XRD spectrum of the core of the positive electrode active material in Example 2 are consistent with those of the undoped LiMnPO₄, indicating that no impurity phase is introduced during the doping process, and the improvement in performance is mainly caused by doping of elements rather than by impurity phase. Fig. 8 shown the X-ray energy dispersive spectrum (EDS) of the core of the positive electrode active material prepared in Example 2. The dotted distribution in Fig. 8 represents individual doping elements. It can be seen from Fig. 8 that the element doping in the core of the positive electrode active material in Example 2 is uniform.

Examples 28-52 were carried out in a similar manner to Example 1, with differences in the preparation of the non-aqueous electrolytic solution. Table 6 shows the performance data of the button battery or full battery of Examples 28-45 as measured in accordance with the test methods described above. Table 7 shows the performance data of the button battery or full battery of Examples 46-52 as measured in accordance with the test methods described above.

**Table 6**

| No. | First additive | | Second additive | | Third additive | | leaching out of Fe and Mn (ppm) after cycle (ppm) | Initial capacity of button battery (mAh/g) | 3C charge constant current ratio (%) | Cycle number corresponding to 80% capacity retention at 45°C | Battery expansion after storage at 60°C (%) |
|---|---|---|---|---|---|---|---|---|---|---|---|
| | Type | W1 (wt%) | Type | W2 (wt%) | Type | W3 (wt%) | | | | | |
| Example 28 | H2 | 1 | / | / | / | / | 42 | 157.6 | 69.1 | 1078 | 4.5 |
| Example 29 | H3 | 1 | / | / | / | / | 48 | 157.3 | 68.8 | 1056 | 4.9 |
| Example 30 | H12 | 1 | / | / | / | / | 46 | 157.4 | 69 | 1067 | 4.7 |
| Example 31 | H19 | 1 | / | / | / | / | 81 | 156.6 | 68.5 | 789 | 6.0 |
| Example 32 | H20 | 1 | / | / | / | / | 52 | 156.7 | 68.6 | 845 | 5.3 |
| Example 33 | H24 | 1 | / | / | / | / | 86 | 156.5 | 68.4 | 731 | 6.5 |
| Example 34 | H28 | 1 | / | / | / | / | 92 | 156.4 | 68.3 | 679 | 7.1 |
| Example 35 | H35 | 1 | / | / | / | / | 61 | 156.9 | 68.5 | 934 | 5.5 |
| Example 36 | H36 | 1 | / | / | / | / | 52 | 157.4 | 69.0 | 1002 | 4.8 |
| Example 37 | H37 | 1 | / | / | / | / | 40 | 157.7 | 69.3 | 1086 | 4.4 |
| Example 38 | H38 | 1 | DTD | 1 | / | / | 23 | 160.3 | 90.4 | 1498 | 2.1 |
| Example 39 | H38 | 1 | Lithium difluorophosphate | 1 | / | / | 25 | 159.6 | 86.3 | 1423 | 2.6 |
| Example 40 | H38 | 1 | Lithium difluorodioxalate phosphate | 1 | / | / | 28 | 159.1 | 81.9 | 1378 | 3.2 |
| Example 41 | H38 | 1 | Lithium fluorosulfonate | 1 | / | / | 29 | 158.8 | 78.4 | 1321 | 3.6 |
| Example 42 | H38 | 1 | Lithium trifluoromethanesulfonate | 1 | / | / | 31 | 158.0 | 74.2 | 1203 | 4.0 |
| Example 43 | H38 | 1 | DTD | 1 | VC | 1 | 8 | 162.4 | 92.1 | 1645 | 0.7 |
| Example 44 | H38 | 1 | DTD | 1 | VEC | 1 | 16 | 161.2 | 91.1 | 1568 | 1.7 |
| Example 45 | H38 | 1 | DTD | 1 | FEC | 1 | 12 | 162.0 | 91.6 | 1600 | 1.3 |

**Table 7**

| No. | First additive | | leaching out of Fe and Mn after cycle (ppm) | Initial capacity of button battery (mAh/g) | 3C charge constant current ratio (% | Cycle numbers corresponding to 80% capacity retention at 45°C | Battery expansion after storage at 60°C (%) |
|---|---|---|---|---|---|---|---|
| | Type | W1 (wt%) | | | | | |
| Example 46 | H38 | 0.01 | 167 | 156.3 | 68.2 | 601 | 8.0 |
| Example 47 | H38 | 0.1 | 63 | 157.0 | 68.7 | 913 | 7.1 |
| Example 48 | H38 | 0.3 | 49 | 157.6 | 69.0 | 1056 | 5.8 |
| Example 49 | H38 | 5 | 26 | 157.4 | 69.0 | 1034 | 3.4 |
| Example 50 | H38 | 8 | 21 | 156.9 | 68.6 | 956 | 2.6 |
| Example 51 | H38 | 10 | 10 | 156.5 | 68.3 | 878 | 1.5 |
| Example 52 | H38 | 20 | 7 | 156.3 | 68.1 | 675 | 0.7 |

As can be seen from the combination of Example 1 and Examples 28-37, the improvement effect on battery performances varies slightly depending on the type of the first additive.

As can be seen from the combination of Example 1 and Examples 38-45, when the non-aqueous electrolytic solution further comprises an appropriate amount of a second additive and/or a third additive, it helps to further improve the specific capacity, the rate performance, the high-temperature cycling performance and the high-temperature storage performance of the battery

As can be seen from the combination of Example 1 and Examples 46-52, as the content of the first additive is increased from 0.01 wt% to 20 wt%, the leaching out of Fe and Mn from the resulting material after cycle gradually decreases, and the storage performance at 60°C of the corresponding batteries also improves, but the specific capacity, the 3C charge constant current ratio and the cycling performance at 45°C will decrease to a certain extent when the content of the first additive is higher.

It should be noted that this application is not limited to the above embodiments. The above embodiments are only provided as examples, and within the technical solution of the present application, embodiments having substantially the same configuration as the technical idea and exerting the same effects are all included within the technical scope of the present application. In addition, various modifications to the embodiments that can be conceived by those skilled in the art without departing from the scope of the spirit of the present application and other embodiments constructed by combining some constituent elements in the embodiments are also included in the scope of the present application.

## Claims

1. A secondary battery comprising a positive electrode plate, a negative electrode plate and a non-aqueous electrolytic solution, wherein
the positive electrode plate comprises a positive electrode active material having a chemical formula of LiₘAₓMn_{1-y}B_{y}P_{1-z}C_{z}O₄₋ₙDₙ, A comprising one or more elements selected from Zn, Al, Na, K, Mg, Nb, Mo and W, B comprising one or more elements selected from Ti, V, Zr, Fe, Ni, Mg, Co, Ga, Sn, Sb, Nb and Ge, C comprising one or more elements selected from B (boron), S, Si and N, D comprising one or more elements selected from S, F, Cl and Br, m being within the range of 0.9 to 1.1, x being within the range of 0.001 to 0.1, y being within the range of 0.001 to 0.5, z being within the range of 0.001 to 0.1, n being within the range of 0.001 to 0.1, and the positive electrode active material is electrically neutral;
the non-aqueous electrolytic solution comprises a first additive comprising one or more of the compounds shown in Formula 1:
O=C=N-R₁-N=C=O Formula 1,
in which R₁ represents at least one of the group consisting of the following groups substituted or unsubstituted by Rₐ: C2-C10 divalent alkyl, C2-C10 divalent heteroalkyl, C6-C18 divalent aryl, C7-C18 divalent aryl alkyl, C7-C18 divalent alkyl aryl, C8-C18 divalent alkyl aryl alkyl, C13-C18 divalent aryl alkyl aryl, C2-C18 divalent heteroaryl, C3-C18 divalent heteroarylalkyl, C3-C18 divalent alkylheteroaryl, C4~C18 divalent alkylheteroarylalkyl, C5-C18 divalent heteroarylalkylheteroaryl, C3-C18 divalent alcyl, C4-C18 divalent alcyl alkyl, C4-C18 divalent alkyl alcyl, C5-C18 divalent alkyl alcyl alkyl, C7-C18 divalent alcyl alkyl alcyl, C2-C18 divalent heteroalcyl, C3-C18 divalent heteroalcyl alkyl, C3-C18 divalent alkyl heteroalcyl, C4-C18 divalent alkyl heteroalcyl alkyl, and C5-C18 divalent heteroalcyl alkyl heteroalcyl;
optionally, Rₐ comprises one or more selected from halogen atoms, -CN, -NCO, -OH, -COOH, -SOOH, carboxylate group, sulfonate group, sulfate group, C1~C10 alkyl, C2-C10 alkenyl, C2-C10 alkynyl, C2-C10 oxoalkyl, phenyl and benzyl.

2. The secondary battery according to claim 1, wherein R₁ represents at least one of the group consisting of the following groups substituted or unsubstituted by Rₐ: C2-C10 alkylidene, C2-C10 oxoalkylidene, C2-C10 azidoalkylidene, phenylidene, o-phenylenedimethylene, m-phenylenedimethylene, p-phenylenedimethylene, monomethylphenylene, dimethylphenylene, trimethylphenylene, tetramethylphenylene, monoethylphenylene, diethylphenylene, triethylphenylene, tetraethylphenylene, biphenylene, terphenylene, quaterphenylene, diphenylmethyl, cyclobutylidene, o-cyclobutyldimethylene, m-cyclobutyldimethylene, p-cyclobutyldimethylene, cyclopentylidene, o-cyclopentyldimethylene, m- cyclopentyldimethylene, p-cyclopentyldimethylene, cyclohexylidene, monomethyl cyclohexylidene, dimethyl cyclohexylidene, trimethyl cyclohexylidene, tetramethyl cyclohexylidene, o-cyclohexyldimethylene, m-cyclohexyldimethylene, p-cyclohexyldimethylene, dicyclohexylmethane, methylcyclohexyl, naphthylene, anthrylene and perhydroanthrylene;
optionally, Rₐ comprises one or more selected from a fluorine atom, -CN, -NCO, -OH, -COOH, -SOOH, carboxylate group, sulfonate group, sulfate group, C1-C10 alkyl, C2-C10 alkenyl, C2-C10 alkynyl, C2-C10 oxoalkyl, phenyl and benzyl.

3. The secondary battery according to any one of claims 1 to 2, wherein the first additive comprises at least one of the following compounds:

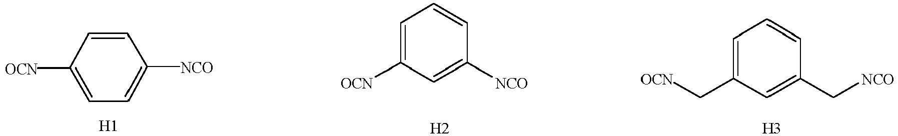

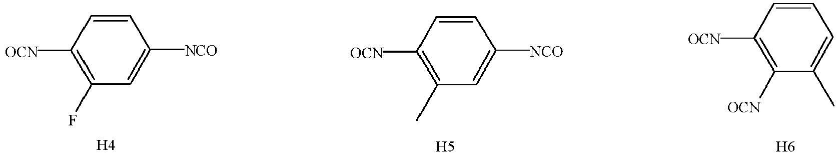

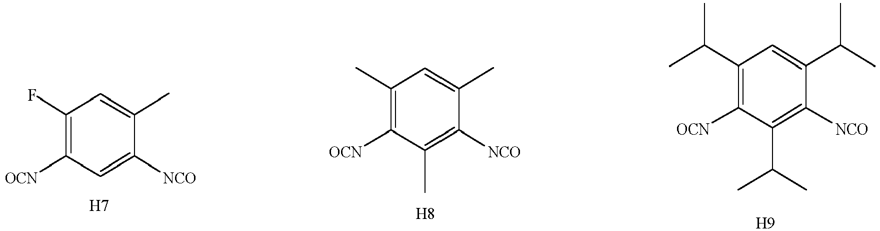

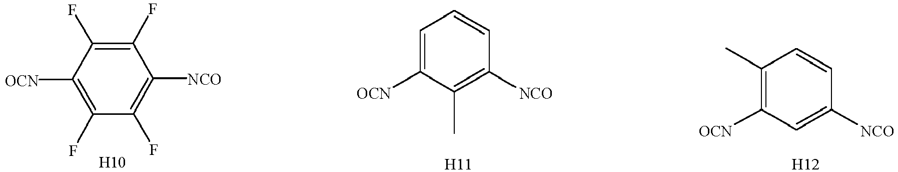

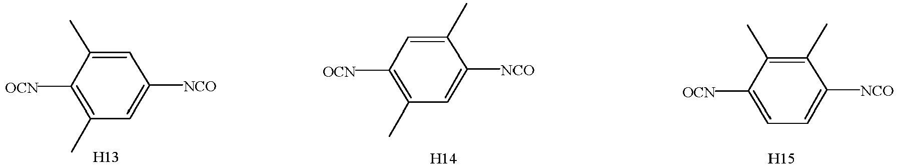

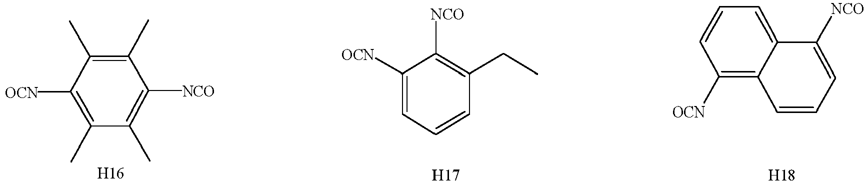

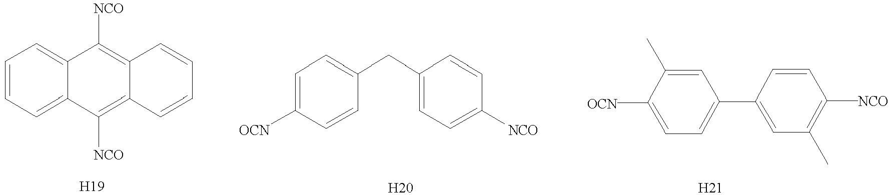

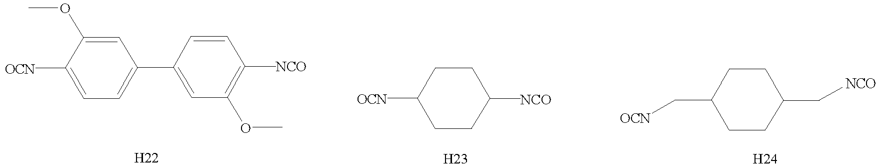

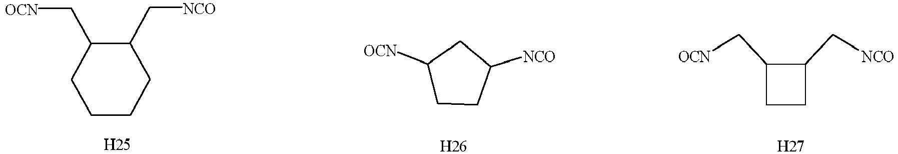

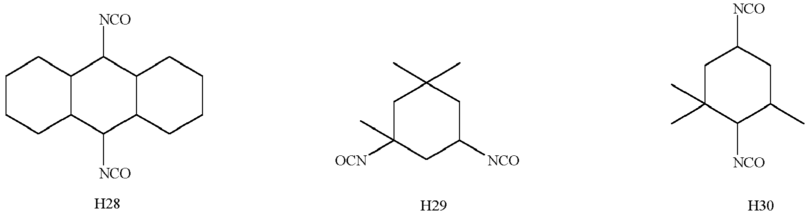

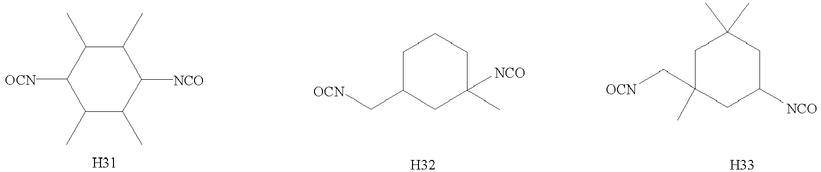

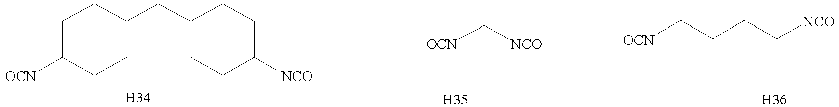

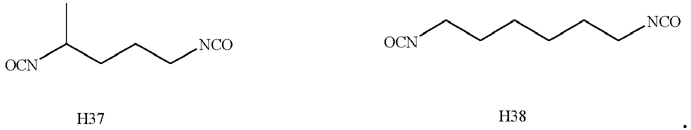

4. The secondary battery according to any one of claims 1-3, wherein
the first additive is present in an amount of W1% by weight, with W1 being 0.01 to 20, optionally 0.1 to 10, more optionally 0.3 to 5, based on the total weight of the non-aqueous electrolytic solution.

5. The secondary battery according to any one of claims 1-4, wherein the non-aqueous electrolytic solution further comprises a second additive, and the second additive comprises one or more of ethylene sulfate, lithium difluorophosphate, R₂[FSO₃⁻]ₐ, R₂[C_{b}F_{2b+1}SO₃⁻]ₐ, a being an integer from 1 to 5 and b being an integer from 1 to 6, and R2 representing a metal cation or an organic group cation;
optionally, the metal cation comprises one or more selected from Li⁺, Na⁺, K⁺, Rb⁺, Cs⁺, Mg²⁺, Ca²⁺, Ba²⁺, Al³⁺, Fe²⁺, Fe³⁺, Cu²⁺, Ni²⁺ and Ni³⁺;
optionally, the organic group cation comprises one or more selected from NH₄⁺, N(CH₃)₄⁺, and N(CH₂CH₃)₄⁺.

6. The secondary battery according to claim 5, wherein the second additive is present in an amount of W2% by weight, with W2 being 0.01 to 20, optionally 0.1 to 10, more optionally 0.3 to 5, based on the total weight of the non-aqueous electrolytic solution.

7. The secondary battery according to any one of claims 1-6, wherein the non-aqueous electrolytic solutionn further comprises a third additive, and the third additive comprises one or more of a cyclic carbonate compound containing unsaturated bonds, a halogenated cyclic carbonate compound, a sulfate compound, a sulfite compound, a sultone compound, a disulfonate compound, a nitrile compound, a phosphonitrile compound, an aromatic hydrocarbon and halogenated aromatic hydrocarbon compound, an acid anhydride compound, a phosphite compound, a phosphate compound, and a borate compound;
optionally, the third additive is present in an amount of W3% by weight, with W3 being 0.01 to 10, optionally 0.1 to 10, more optionally 0.3 to 5, based on the total weight of the non-aqueous electrolytic solution.

8. The secondary battery according to any one of claims 1-7, wherein A, C and D are each independently any one element within the respective ranges, and wherein B is at least two elements within its range;
optionally,
A is an element selected from any one of Mg and Nb, and/or
B is at least two elements selected from among Fe, Ti, V, Co and Mg, optionally Fe with more than one element selected from among Ti, V, Co and Mg, and/or
C is S, and/or
D is F.

9. A secondary battery according to any one of claims 1-8, wherein
x is within the range of 0.001 to 0.005; and/or.
y is within the range of 0.01 to 0.5, optionally from the range of 0.25 to 0.5; and/or
z is within the range of 0.001 to 0.005; and/or.
n is within the range of 0.001 to 0.005.

10. The secondary battery according to any one of claims 1-9, wherein (1-y):y is in the range of 1 to 4, optionally in the range of 1.5 to 3, and m:x is in the range of 9 to 1100, optionally in the range of 190-998.

11. The secondary battery according to any one of claims 1-10, wherein the positive electrode active material satisfies at least one of the following conditions (1) to (4):
(1) the positive electrode active material has a lattice change rate of 8% or less, optionally 4% or less;
(2) the positive electrode active material has a Li/Mn anti-site defect concentration of 2% or less, optionally 0.5% or less;
(3) the positive electrode active material has a surface oxygen valence state of -1.82 or less, optionally -1.89 to -1.98;
(4) the positive electrode active material has a compaction density at 3T of 2.0 g/cm³ or more, optionally 2.2 g/cm³ or more.

12. The secondary battery according to any one of claims 1-11, wherein the surface of the positive electrode active material is coated with carbon.

13. A battery module, comprising the secondary battery according to any one of claims 1 to 12.

14. A battery pack, comprising the battery module according to claim 13.

15. An electrical device comprising at least one of the secondary battery according to any one of claims 1 to 12, the battery module according to claim 13 or the battery pack according to claim 14.
